# EUROPEAN PATENT SPECIFICATION

(11) **EP 4 390 467 B1**
(45) Date of publication and mention of the grant of the patent: **14.05.2025**
(21) Application number: 22307015.2
(22) Date of filing: 22.12.2022
(51) Int. Cl.: G01V 3/08, G01B 7/004, G06F 3/0362, G06F 3/0346, G06F 1/16

(54) **PASSIVE ACCESSORIES**
PASSIVES ZUBEHÖR
ACCESSOIRES PASSIFS

(43) Date of publication of application: 26.06.2024
(73) Proprietor: Advanced Magnetic Interaction, AMI, 38170 Seyssinet-Pariset (FR)
(72) Inventor: HAUTSON, Tristan, 38170 Seyssinet-Pariset (FR); PELLERANO, Vincent, 38170 Seyssinet-Pariset (FR)
(74) Representative: Peterreins Schley

(56) References cited:
- EP-A1- 3 907 465
- US-A1- 2013 249 784
- US-B2- 9 436 342

## Description

### TECHNICAL FIELD

The present disclosure relates to the technical field of determining and/or tracking a location of passive accessories, more specifically to a computer-implemented method determining a location of at least one user-borne device, to an electronics device for determining a location of at least one user-borne device and to a system for determining a location of at least one user-borne device.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

A user-operation of the user-borne device within a sensing volume created by the plurality of magnetometers may be represented on an output device (e.g., a screen) to a user. More specifically, a movement of the user-borne device within the sensing volume may be reproduced as a movement of a virtual object on the output device. Determining and/or tracking the location of the user-borne device by means of the magnetic object may require the definition of an interaction surface, i.e., a surface on which the user-borne device is operated. The magnetic object is usually distanced to the interaction surface. In current applications, the plurality of magnetometers may be arranged in an electronics device (e.g., a tablet). To determine a location of the user-borne device relative to the interaction surface, it is assumed in known applications that the interaction surface is exactly parallel to and directly above a magnetometer plane (e.g., a plane which is defined by the plurality of magnetometers). However, assuming the interaction surface to be exactly parallel may limit the applications of user-borne device location determination and/or tracking. Current applications do not allow, or at least with insufficient accuracy, the determination and/or tracking of the user-borne device location (and the representation as a virtual object) when the plurality of magnetometers is moved (e.g., rotated) relative to the interaction surface.

US9436342B2 and EP3907465A1 disclose methods and devices for determining a location of a user-borne device using a plurality of magnetometers arranged in an electronics device, wherein the user-borne device is coupled to a magnetic object.

Thus, an object of the present disclosure is to provide a computer-implemented method, an electronics device, and a system which enable a determination and/or tracking of a location of at least one user-borne device with increased accuracy and reliability.

### SUMMARY

The present disclosure relates to a computer-implemented method for determining a location of at least one user-borne device as defined in claim 1, an electronics device for determining a location of at least one user-borne device as defined in claim 14, and a system for determining a location of at least one user-borne device as defined in claim 15. The dependent claims depict embodiments of the present disclosure.

According to a first aspect of the present disclosure, a computer-implemented method for determining a location of at least one user-borne device comprises obtaining magnetic field measurements associated with at least one magnetic object with a plurality of magnetometers, wherein the at least one magnetic object is coupled to at least one user-borne device, and wherein the at least one user-borne device is associated with an interaction reference coordinate system. Furthermore, the computer-implemented method comprises obtaining orientation data from at least one orientation sensor, wherein the at least one orientation sensor is arranged in an electronics device, and wherein the plurality of magnetometers is arranged in the electronics device. In addition, the computer-implemented method comprises determining an orientation and a position of the plurality of magnetometers relative to the interaction reference coordinate system based on the obtained orientation data. The computer-implemented method further comprises determining a user-borne device location relative to the interaction reference coordinate system based on the obtained magnetic field measurements and the determined orientation and position. The plurality of magnetometers arranged in the electronics device may be movable, more specifically rotatable, relative to the interaction reference coordinate system. Based on the computer-implemented method as described above, the determination and/or tracking of the location of the at least one user-borne device relative to the interaction reference coordinate system can be enabled although the plurality of magnetometers may be moved (e.g., rotated) to different positions and/or orientations relative to the interaction reference coordinate system, more specifically relative to an interaction surface. The determined orientation and position may include an inclination, an orthogonal orientation, a parallel orientation, a rotation and/or a position of the plurality of magnetometers relative to the interaction reference coordinate system. The plurality of magnetometers may be arranged in a movable part of the electronics device. Furthermore, the determination of the user-borne borne device location relative to the interaction reference coordinate system may be automatically adapted even when the plurality of magnetometers is rotated relative to the interaction reference coordinate system, more specifically to the interaction surface. Thus, the location of the at least one user-borne device can be determined and/or tracked with increased accuracy and/or reliability. A representation of the at least one user-borne device as a virtual object on at least one output device can be provided with increased accuracy and reliability.

According to a second aspect of the present disclosure, an electronics device for determining a location of at least one user-borne device comprises a plurality of magnetometers and at least one orientation sensor. The electronics device is configured to execute a computer-implemented method according to the first aspect of the present disclosure. The electronics device may provide the advantages as outlined for the first aspect of the present disclosure.

According to a third aspect of the present disclosure, a system for determining a location of at least one user-borne device comprises at least one user-borne device associated with an interaction reference coordinate system, wherein the at least one user-borne device comprises at least one magnetic object. Furthermore, the system comprises an electronics device according to the second aspect of the present disclosure. The system may provide the advantages as outlined for the first aspect or the second aspect of the present disclosure.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Figs. 1 and 2**: are schematic perspective views of the system for determining a location of at least one user-borne device according to an aspect of the present disclosure;
- **Figs. 3A to 3E**: are schematic views of an electronics device according to aspects of the present disclosure with different embodiments of orientation sensors;
- **Fig. 4**: is a schematic view of the electronics device according to an aspect of the present disclosure and a user-borne device being operated together with the electronics device;
- **Figs. 5A and 5B**: are schematic views of embodiments of the electronics device according to aspects of the present disclosure;
- **Figs. 6A and 6B**: are schematic views of a user-borne device comprising at least one magnetic object;
- **Figs. 7A and 7B**: are schematic views of a user-borne device comprising at least one magnetic object, wherein the magnetic object is rotatable about a second user-borne device axis;
- **Figs. 8A and 8B**: are schematic views of a user-borne device comprising at least one magnetic object, wherein the magnetic object is rotatable about a first user-borne device axis;
- **Fig. 9**: is a schematic view of a plurality of magnetometers arranged in rows and columns with respect to the electronics device, more specifically a second device part of the electronics device;
- **Fig. 10**: is a schematic view of a user-borne device moved on an interaction support;
- **Fig. 11**: schematically illustrates the steps of a computer-implemented method for determining a location of at least one user-borne device according to aspects of the present disclosure;
- **Fig. 12**: schematically illustrates in more detail the steps of a computer-implemented method for determining a location of at least one user-borne device according to aspects of the present disclosure.

### DETAILED DESCRIPTION

Embodiments of the computer-implemented method, the electronics device and the system for determining a location of at least one user-borne device according to the present disclosure will be described in reference to the drawings as follows.

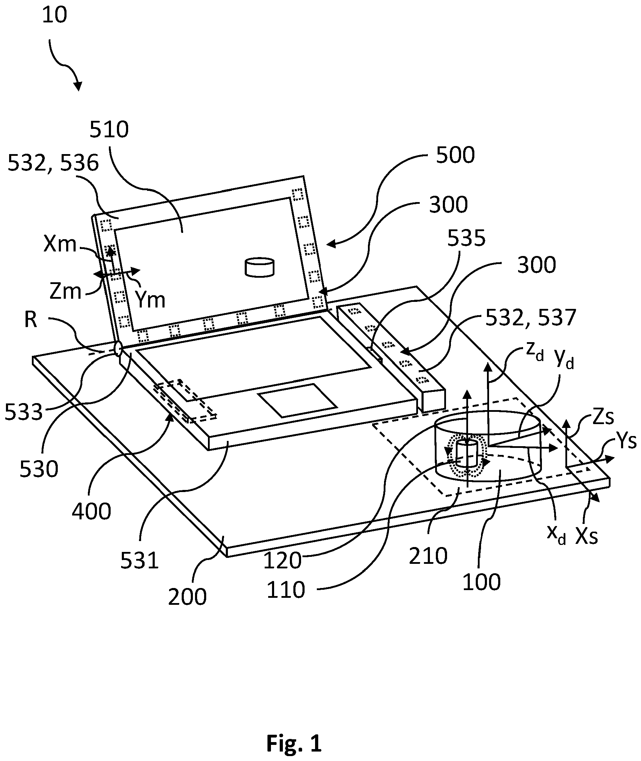

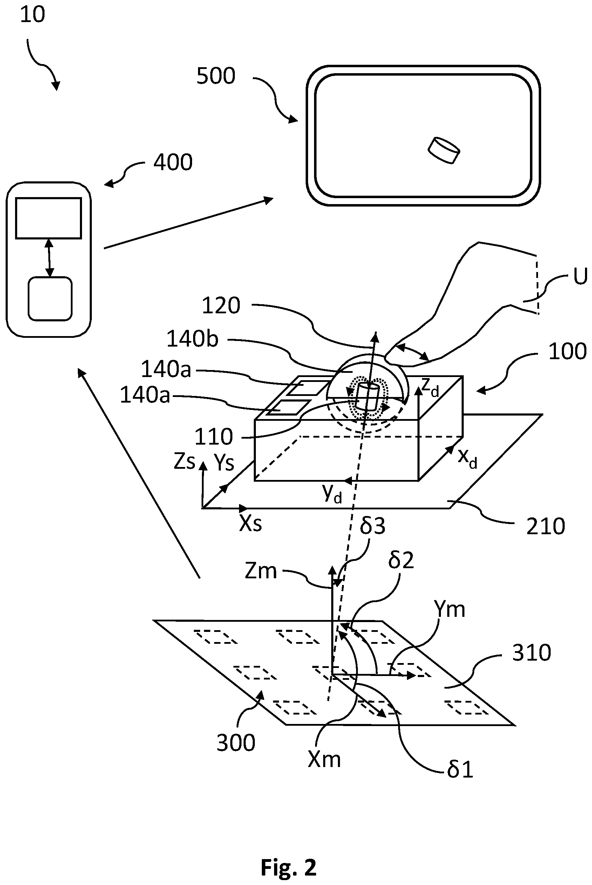

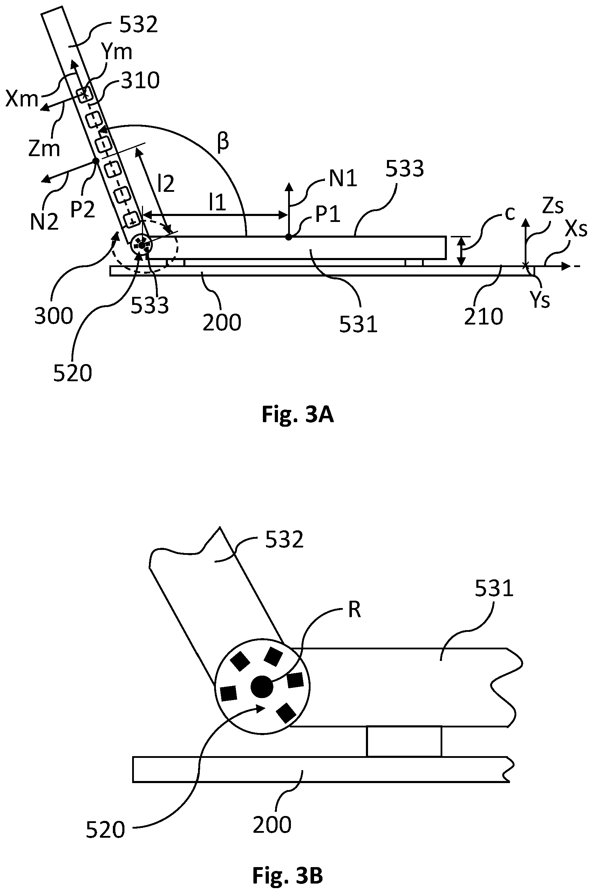

Figs. 1 and 2 schematically illustrates a system 10 for determining a location of at least one user-borne device 100 according to aspects of the present disclosure. Referring to Fig. 1, the system for determining a location of at least one user-borne device 100 comprises at least one user-borne device 100 associated with an interaction reference coordinate system Xs, Ys, Zs. The at least one user-borne device 100 comprises at least one magnetic object 110. Furthermore, the system 10 comprises an electronics device 500 for determining a location of at least one user-borne device 100. More specifically, the system 10 and/or the electronics device 500 may be suitable for determining a location of at least one electrically and/or electronically passive user-borne device 100. In other words, the system 10 and/or electronics device 500 may be suitable for determining and/or tracking a location of at least one user-borne device 100 within a sensing volume M. Embodiments of the electronics device 500 will be described with reference to Figs. 3A to 5B below. The electronics device 500 comprises a plurality of magnetometers 300 and at least one orientation sensor 520 (not shown in Figs. 1 and 2). The at least one orientation sensor 520 may be configured to detect a rotation and/or to measure an orientation of the plurality of magnetometers 300 relative to the interaction reference coordinate system Xs, Ys, Zs. Embodiments of the at least one orientation sensor 520 will be explained with reference to Figs. 3A to 5B below. The electronics device 500 is configured to execute a computer-implemented method 600 for determining a location of at least one user-borne device 100 as described below.

In embodiments, the electronics device 500 may comprise (or may be) a notebook, a laptop, a smartphone, a cell phone, a screen, a virtual reality (VR) set, a board, a tablet, a foldable smartphone, a foldable tablet, and/or an electronics device sleeve. The board may be e.g., a whiteboard, a blackboard, a digital board (on which a stylus may be operated), a drawing and/or writing board, or a presentation board. In embodiments, the at least one user-borne device 100 may be a computer mouse, a keyboard, a ring, a toy, a stylus, a dial or a pointer.

Referring to Figs. 1 and 2, the electronics device 500 may comprise at least one output device 510. In some embodiments, the system 10 may comprise at least one additional output device. The at least one additional output device may be configured to represent the at least one user-borne device 100, more specifically to reproduce the at least one user-borne device 100 as a virtual object. The at least one additional output device may be separate to the electronics device 500. In embodiments, the at least one output device 510 and/or the at least one additional output device may be a display or a screen.

Furthermore, as shown e.g., in Fig. 1, the electronics device 500 may comprise a first device part 531 and at least one second device part 532. The at least one second device part 532 may be coupled to the first device part 531. The at least one second device part 532 may be movable, more specifically rotatable, relative to the first device part 531. The plurality of magnetometers 300 may be arranged in the at least on second device part 532. The at least one output device 510 may be arranged in the at least one second device part 532 and/or the at least one first device part 531.

The plurality of magnetometers 300 may be fixedly arranged in the at least one second device part 532 defining a fixed position and/or orientation of the plurality of magnetometers 300 with respect to each other. In some embodiments, the plurality of magnetometers 300 may define a magnetometer plane 310 which may be defined by a plane that extends through a majority of the plurality of magnetometers 300. More specifically, the magnetometer plane 310 may extend through centers, more specifically geometric centers, of a majority of the plurality of magnetometers 300. In other words, most of the magnetometers of the plurality of magnetometers 300 may be arranged in a common plane, i.e., the magnetometer plane 310. However, one or more magnetometers of the plurality of magnetometers 300 may be distanced and/or inclined with respect to the common plane, e.g., due to manufacturing issues and/or tolerances. The magnetometer plane 310 may additionally or alternatively be defined by a plane in which the magnetometers of the plurality of magnetometers 300 are predominantly arranged.

A measurement reference coordinate system Xm, Ym, Zm may be defined relative to the plurality of magnetometers 300 (see, e.g., Figs. 1 to 4). The measurement reference coordinate system Xm, Ym, Zm may be associated with a location (i.e., an orientation and/or a position) of at least one magnetometer of the plurality of magnetometers 300. The measurement reference coordinate system Xm, Ym, Zm may comprise a first measurement reference axis Xm, a second measurement reference axis Ym and a vertical measurement reference axis Zm. The first measurement reference axis Xm and the second measurement reference axis Ym may be orthogonal to each other. The vertical measurement reference axis Zm may be orthogonal to the first measurement reference axis Xm and the second measurement reference axis Ym. In some embodiments, the measurement reference coordinate system Xm, Ym, Zm may extend through a center of the plurality of magnetometers 300. Optionally, the first measurement reference axis Xm and the second measurement reference axis Ym may be defined on the magnetometer plane 310. The vertical measurement reference axis Zm may be orthogonal to the magnetometer plane 310.

The plurality of magnetometers 300 may be configured to measure a magnetic field associated with the at least one magnetic object 110. The at least one magnetic object 100 may be arranged in or coupled to the at least one user-borne device 100. As outlined above, each magnetometer of the plurality of magnetometers 300 may be configured to measure the magnetic field associated with the at least one magnetic object 110 in the direction of the first measurement reference axis Xm, the second reference axis Ym, and/or the vertical reference axis Zm. In other words, each magnetometer of the plurality of magnetometers 300 may be configured to perform magnetic field measurements in the direction of one axis (i.e., one dimension), two axes (i.e., two dimensions), or three axes (i.e., three dimensions). The number of magnetometers provided may depend on the desired size of the sensing volume M within which the at least one user-borne device 100 is operated. The plurality of magnetometers 300 may be configured to collect magnetic field measurements associated with the at least one magnetic object 110 within the sensing volume M up to a maximum measurement distance. In embodiments, the maximum measurement distance may be 30cm, more specifically 15cm. In embodiments, the maximum measurement distance may be defined between a furthest point of the interaction reference coordinate system Xs, Ys, Zs or within the sensing volume M to a closest magnetometer of the plurality of magnetometers 300.

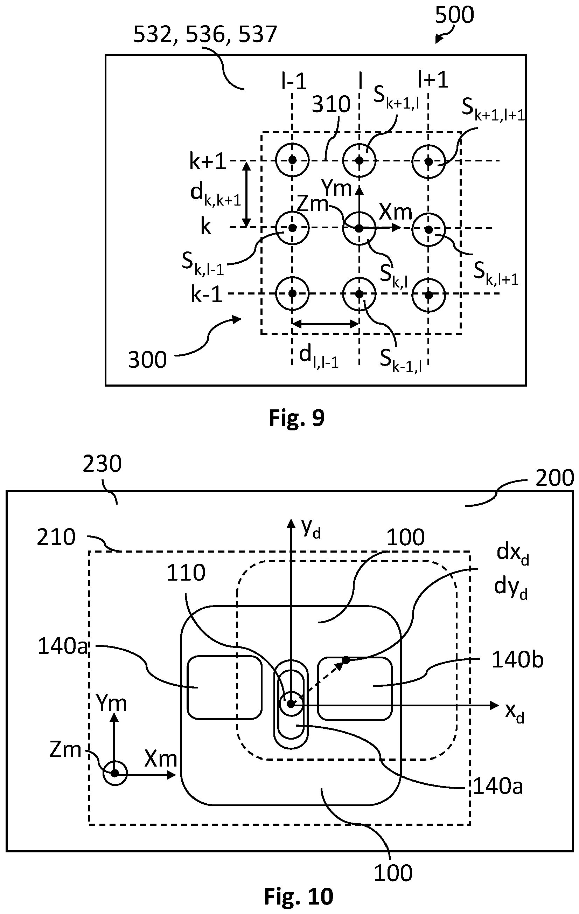

Referring to Fig. 9, an arrangement of the plurality of magnetometers with respect to the at least one second device part 532 is shown. In the embodiment shown in Fig. 9, the plurality of magnetometers 300 may be arranged in rows and columns. However, it is also possible that the plurality of magnetometers 300 may be arranged in an unordered manner within the at least one second device part 532. A calibration procedure may be used to determine the exact locations and measurement axes of each magnetometer within the at least one second device part 532 relative to the measurement coordinate system Xm, Ym, Zm. The plurality of magnetometers 300 are shown in Fig. 9 as being arranged in the magnetometer plane 310 (i.e., in the same plane relative to the vertical measurement reference axis Zm). However, as outlined above, one or more of the magnetometers may be distanced to the magnetometer plane 310, more specifically distanced in the direction of the vertical measurement reference axis Zm. In some embodiments, the at least one second device part 532 may comprise at least one output device 510 (see, e.g., Fig. 1). The at least one output device 510 may comprise a display or a screen. The plurality of magnetometers 300 may be arranged laterally and/or behind the display or screen.

In the arrangement of Fig. 9, the plurality of magnetometers 300 may be arranged in the at least one second device part 532 in rows k und columns l. Each magnetometer S_{k,l} may comprise a vertical magnetometer axis (e.g., Zm) which may be arranged on the intersections of the rows k and columns l. Adjacent magnetometers S_{k,l}, S_{k,l+1}, S_{k,l-1} may be separated along a row k by a distance di_{l,l+1} and d_{l,l-1}. Adjacent magnetometers S_{k,l}, S_{k+1,l}, S_{k-1,l} may be separated along a column l by a distance d_{k,k+1} and d_{k,k-1}. As outlined above, the distances dₖ, dₗ between the respective magnetometers S_{k,l} may be equal or may differ. As shown e.g., in Fig. 1, the plurality of magnetometers 300 may be arranged laterally with respect to the at least one output device 510. In the embodiment of Fig. 1, the plurality of magnetometers 300 may be arranged adjacent a left edge, a right edge and/or a bottom edge of the at least one second device part 532.

The electronics device 500 may comprise or may be connectable to a processing unit 400 configured to execute the computer-implemented method 600 as described below. The electronics device 500 may comprise a user interface configured to interact with a user U. In some embodiments, the user-interface may be provided by the at least one output device 510, by a keyboard arranged in the first device part 531 and/or the at least one second device part 532, and/or a tracking pad arranged in first device part 531 and/or the at least one second device part 532.

In embodiments of the electronics device 500, the at least one second device part 532 may be rotatably coupled to the first device part 531. The at least one second device part 532 may be rotatably coupled via at least one hinge 533 defining at least one rotation axis R to the first device part 531. The at least one second device part 532 may be fixedly or releasably coupled via the at least one hinge to the first device part 531. In some embodiments (not shown in the Figs.), a first hinge may be provided and at least on second hinge. The first hinge may define a first rotation axis. The at least one second hinge may define at least one second rotation axis. In embodiments, the first rotation axis may be parallel to the at least one second rotation axis. In some embodiments, the first rotation axis may be inclined and/or orthogonal to the at least one second rotation axis. In an embodiment, the electronics device 500 may further comprise at least one output device 510. The at least one output device 510 may comprise a display or a screen. The plurality of magnetometers 300 may be arranged laterally and/or behind the display or the screen as described above. In these embodiments, the electronics device 500 may be e.g., a laptop or a notebook (see, e.g., Fig. 1).

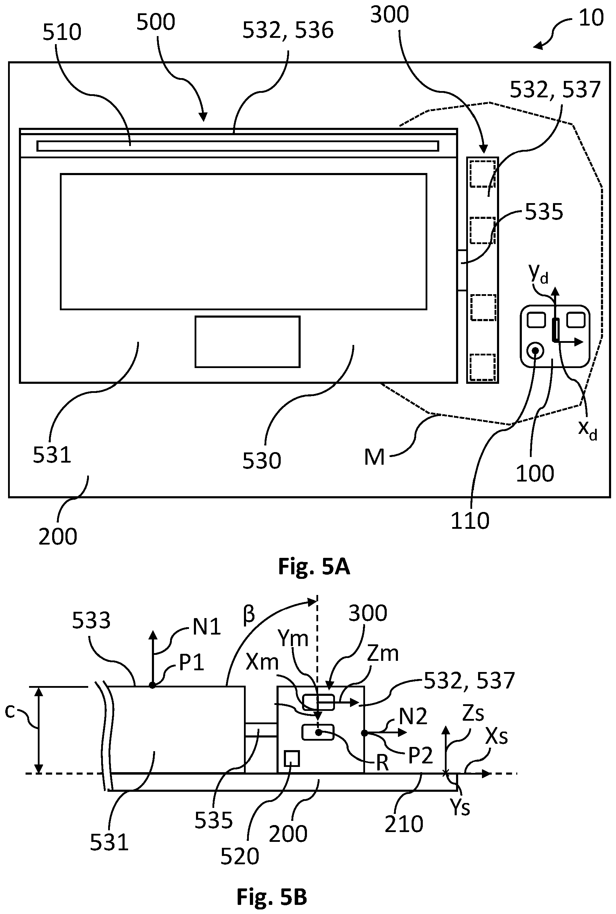

In embodiments of the electronics device 500, the at least one second device part 532 may comprise an output device part 536 and at least one auxiliary device part 537 (see, e.g., Fig. 1). As shown in the example of Fig. 1, the at least one auxiliary device part 537 may be a measurement bar comprising a plurality of magnetometers 300. The output device part 536 may be rotatably coupled via at least one hinge 533 defining at least one rotation axis R to the first device part 531. The at least one hinge 533 and the at least one rotation axis R may comprise the features as defined above. The at least one auxiliary device part 537 may be releasably coupled to the first device part 531 at least via a data and/or power transmission port 535 (see, e.g., Figs. 1, 5A and 5B). The output device part 536 may comprise at least one output device 510. As described above, the at least one output device 510 may comprise a display or a screen. The plurality of magnetometers 300 may be arranged laterally and/or behind the display or the screen. In these embodiments, the electronics device 500 may comprise e.g., a laptop or a notebook, and e.g., at least one measurement bar coupled to the laptop or notebook (see, e.g., Fig. 1). As shown in Figs. 1, 5A and 5B, the at least one auxiliary device part 537 may be coupled to a right-side edge of the first device part 531. However, in embodiments, the at least one auxiliary device part 537 may be coupled to a left-side edge, a back-side edge (which, in use, faces away from a user), a front-side edge (which, in use, faces towards a user), a top surface 534 and/or a bottom surface of the first device part 531.

In embodiments of the electronics device 500, the at least one second device part 532 may be releasably coupled to the first device part 531 at least via a data and/or power transmission port 535. The first device part 531 may comprise at least one output device 510. In these embodiments, the first device part 531 may be, e.g., a tablet, and the at least one second device part 532 may be, e.g., a measurement bar coupled to the tablet (and/or e.g., a display or screen coupled to the tablet). More specifically, the plurality of magnetometers 300 may be arranged in the measurement bar. In embodiments, the electronics device 500 may comprise a third device part 536. The third device part 536 may be rotatably coupled to the first device part 531, more specifically via at least one hinge 533 as described above. The third device part 536 may comprise at least one output device 510. The plurality of magnetometers 300 may not be arranged in the third device part 536.

Figs. 3A to 3E are schematic views of an electronics device 500 according to some embodiments. As outlined above, the electronics device 500 comprises at least one orientation sensor 520. As shown in the embodiment of Figs. 3A and 3B, the at least one orientation sensor 520 may comprise an angle sensor arranged between the at least one second device part 532 and the first device part 531. The angle sensor may be configured to generate angle sensor measurement data between the first device part 531 and the at least one second device part 532. The angle sensor may be arranged on or in the at least one hinge 533. Angle sensor measurement data may be indicative of a rotation and/or an orientation of the at least one second device part 532 relative to the first device part 531.

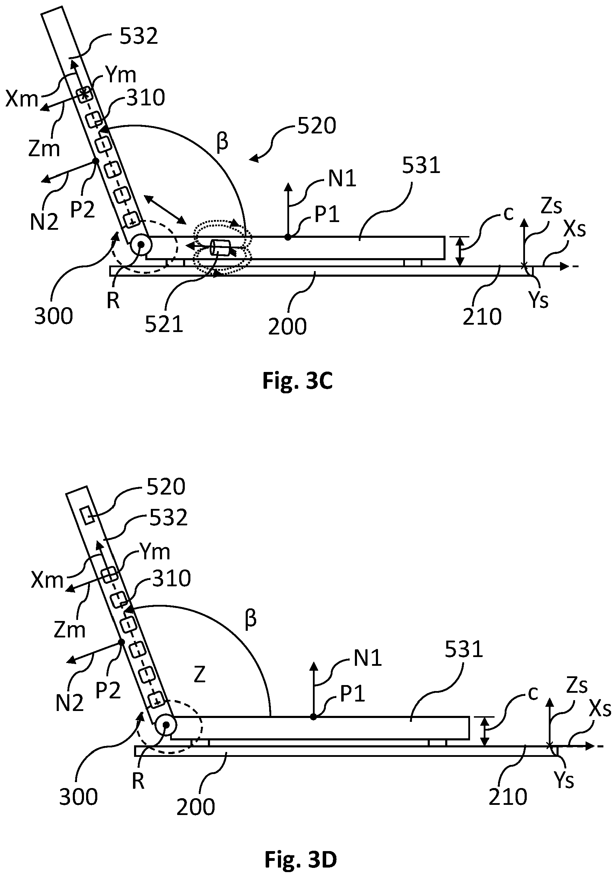

Referring to the embodiment shown in Fig. 3C, the at least one orientation sensor 520 may comprise at least one magnetic object 521 arranged in the first device part 531 and one or more of the plurality of magnetometers 300 arranged in the at least one second device part 532. In this embodiment, the at least one orientation sensor 520 may be configured to generate magnetic field measurement data associated with the at least one magnetic object 521. Magnetic field measurement data associated with the at least one magnetic object 521 may be indicative of a rotation and/or an orientation of the at least one second device part 532 relative to the first device part 531.

Referring to the embodiment shown in Fig. 3D, the at least one orientation sensor 520 may comprise at least one accelerometer arranged in the at least one second device part 532 and/or the first device part 531. More specifically, the at least one orientation sensor 520 may be configured to generate accelerometer measurement data. The accelerometer may be configured to measure a physical acceleration experienced by a rotation and/or an orientation of the at least one second device part 532 relative to the first device part 531. In embodiments, an accelerometer may be arranged in the at least one second device part 532 and another accelerometer may be arranged in the first device part 531. The measurement data of the respective accelerometers may be compared to each other. The compared accelerometer measurement data may be indicative of a rotation and/or an orientation of the at least one second device part 532 relative to the first device part 531.

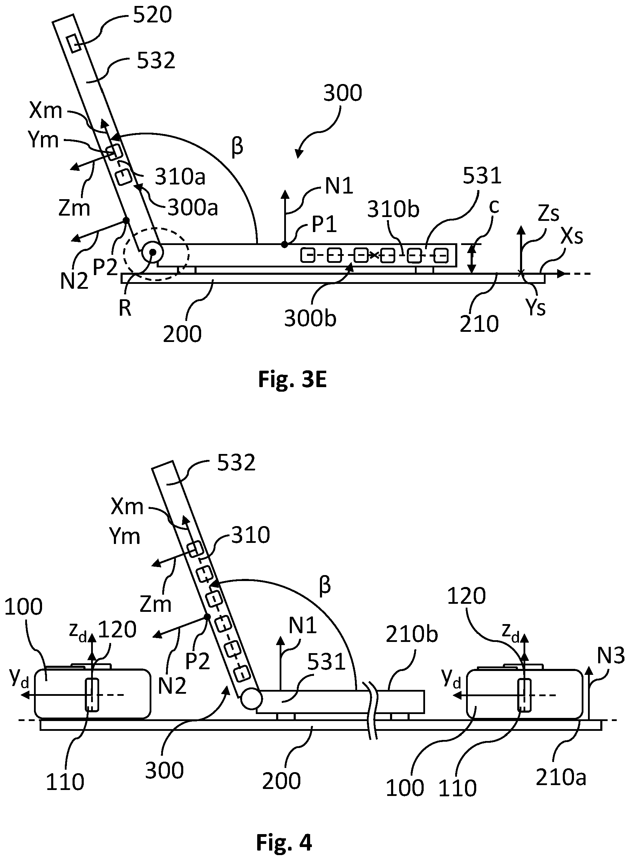

As shown in the embodiment in Fig. 3E, the plurality of magnetometers 300 may be a first plurality of magnetometers 300a. The created magnetic field measurements (measured with the plurality of magnetometers 300) may be first magnetic field measurements. The electronics device 500 may comprise a second plurality of magnetometers 300b. The second plurality of magnetometers 300 may be arranged in the first device part 531. The at least one orientation sensor 520 may comprise the first plurality of magnetometers 300a and the second plurality of magnetometers 300b. The at least one orientation sensor 520 may be configured to generate first magnetic field measurement data associated with the at least one magnetic object 110 with the first plurality of magnetometers 300a, and second magnetic field measurement data associated with the at least one magnetic object 110 with the second plurality of magnetometers 300b. First magnetic field measurement data and second magnetic field measurement data may be evaluated and/or compared with respect to each other. The compared magnetic field measurement data may be indicative of a rotation and/or an orientation of the at least one second device part 532 relative to the first device part 531.

As shown in the embodiment of Fig. 4, the at least one orientation sensor 520 may comprise the plurality of magnetometers 310. The at least one orientation sensor 520 may be configured to generate magnetic field measurement data associated with the at least one magnetic object 110. More specifically, magnetic field measurement data associated with the at least one magnetic object 110 may be indicative of an interaction surface normal N3, particularly in an initial state of the at least one user-borne device 100. Based on the magnetic field measurement data indicative of the interaction surface normal N3, an orientation and/or a rotation of the at least one second device part 532 relative to the at least one first device part 531 may be determined.

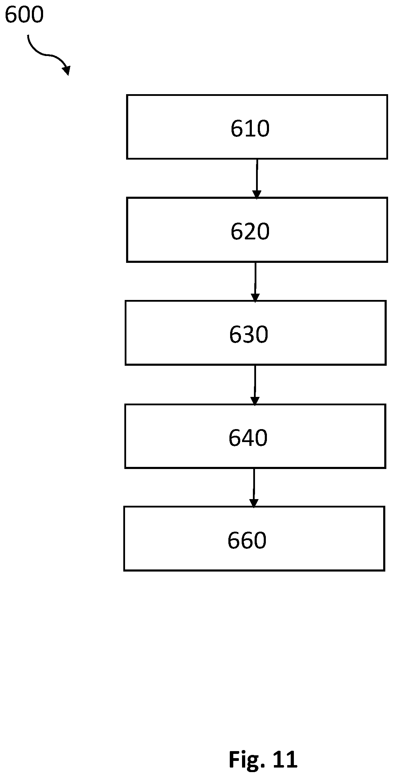

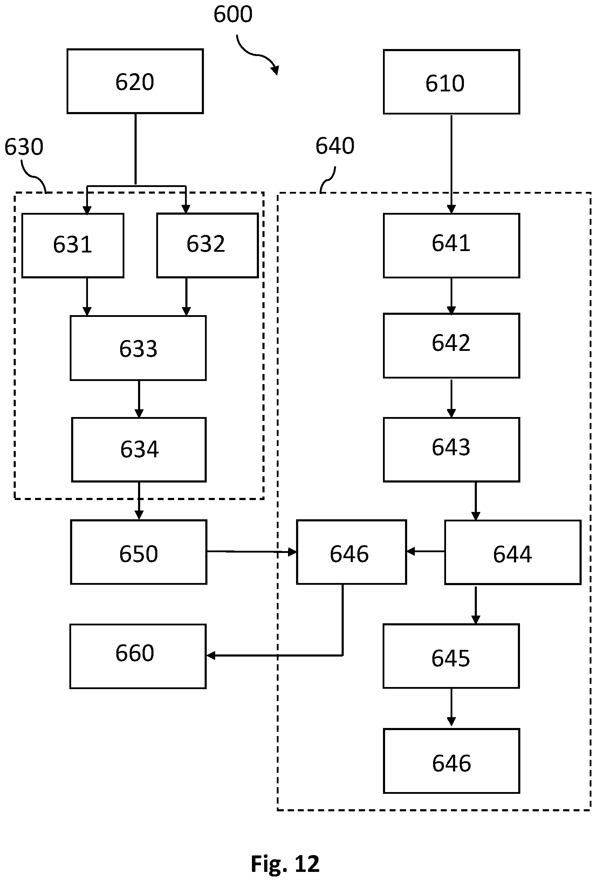

Fig. 11 schematically illustrates the steps of a computer-implemented method 600 for determining a user-borne device location according to aspects of the present disclosure. Fig. 12 schematically illustrates the steps of the computer-implemented method 600 in more detail. The computer-implemented method 600 comprises obtaining magnetic field measurements 610 associated with at least one magnetic object 110 with a plurality of magnetometers 300. The at least one magnetic object 110 is coupled to at least one user-borne device 100. The at least one user-borne device 100 is associated with an interaction reference coordinate system Xs, Ys, Zs. The computer-implemented method 600 comprises obtaining orientation data 620 from at least one orientation sensor 520, wherein the at least one orientation sensor 520 is arranged in an electronics device 500. The plurality of magnetometers 300 is arranged in the electronics device 500. Furthermore, the computer-implemented method 600 comprises determining an orientation and a position 630 of the plurality of magnetometers 300 relative to the interaction reference coordinate system Xs, Ys, Zs based on the obtained orientation data. In addition, the computer-implemented method 600 comprises determining a user-borne device location 640 (more specifically, of the at least one user-borne device 100) relative to the interaction reference coordinate system Xs, Ys, Zs based on the obtained magnetic field measurements and the determined orientation and position. The plurality of magnetometers 300 arranged in the electronics device 500 may be movable, more specifically rotatable, relative to the interaction reference coordinate system Xs, Ys, Zs, particularly to the interaction surface 210. Based on the computer-implemented method 600 as described above, the determination and/or tracking of the location of the at least one user-borne device 100 relative to the interaction reference coordinate system Xs, Ys, Zs can be enabled although the plurality of magnetometers may be moved (e.g., rotated) to different positions and/or orientations relative to the interaction reference coordinate system Xs, Ys, Zs, more specifically relative to the interaction surface 210. The determined orientation and position may include an inclination, an orthogonal orientation, a parallel orientation, a rotation and/or a position of the plurality of magnetometers 300 relative to the interaction reference coordinate system Xs, Ys, Zs. The plurality of magnetometers 300 may be arranged in a movable part (i.e., the at least one second device part 532) of the electronics device 500. Furthermore, the determination of the user-borne borne device location relative to the interaction reference coordinate system Xs, Ys, Zs may be automatically adapted even when the plurality of magnetometers 300 is rotated relative to the interaction reference coordinate system Xs, Ys, Zs, more specifically to the interaction surface 210. Thus, the location of a at least one user-borne device 100 can be determined and/or tracked with increased accuracy and/or reliability. A representation of the at least one user-borne device 100 as a virtual object on at least one output device 510 can be provided with increased accuracy and reliability. The same applies for the electronics device 500 configured to execute the computer-implemented method 600 and the system 10 comprising the electronics device 500. The order, in which the data or measurements as described above are obtained, may vary.

As shown, e.g., in Figs. 1 and 2, the at least one user-borne device 100 may be operable on an interaction surface 210. More specifically, the vertical interaction reference axis Zs of the interaction reference coordinate system Xs, Ys, Zs may be orthogonal to the interaction surface 210. In embodiments, the first interaction reference axis Xs and the second interaction reference axis Ys may be defined on the interaction surface 210. The first device part 531 may comprise a top surface 534. In some embodiments, the interaction reference coordinate system Xs, Ys, Zs may be defined on the top surface 534. In some embodiments, the vertical interaction reference axis Zs may be orthogonal to the first device part 531, more specifically to the top surface 534.

The plurality of magnetometers 300 may be configured to create a sensing volume M (as indicated, e.g., in Fig. 5). The interaction reference coordinate system Xs, Ys, Zs and/or the interaction surface 210 may be defined within the sensing volume M. The sensing volume M may have an ellipsoidal form. In some embodiments, the plurality of magnetometers 300 may be associated with a magnetometer plane 310 as described above. The method 600 may comprise defining a measurement reference coordinate system Xm, Ym, Zm relative to the plurality of magnetometers 300 (see, e.g., Figs. 1 to 4). The measurement reference coordinate system Xm, Ym, Zm may be associated with a location of at least one magnetometer of the plurality of magnetometers 300 as mentioned above.

The at least one user-borne device 100 may be electrically and/or electronically passive. More specifically, electrically passive means that the at least one user-borne device 100 may not comprise a power source (e.g., batteries) and/or means to receive power (e.g., wireless power transmission via an inductive coil) for powering a feature (e.g., an electronic feature) of the at least one user-borne device 100. Electronically passive means that no computation or processing occurs (or happens) on the at least one user-borne device 100.

The term "at least one magnetic object" may refer to an object which may comprise components made of magnetic material, i.e., a material that has magnetic properties measurable by the plurality of magnetometers 300. The at least one user-borne device 100 and/or the at least one magnetic object 210 may be mobile, i.e., freely movable with respect to the measurement reference coordinate system Xm, Ym, Zm. In other words, during a user operation (i.e., an operation wherein the at least one user-borne device 100 and/or the at least one magnetic object 110 is operated by a user), the location of the at least one user-borne device 100 within the sensing volume M and/or relative to the interaction reference coordinate system Xs, Ys, Zs (more specifically, the interaction surface 210) may be manipulated by a user within the sensing volume M.

The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

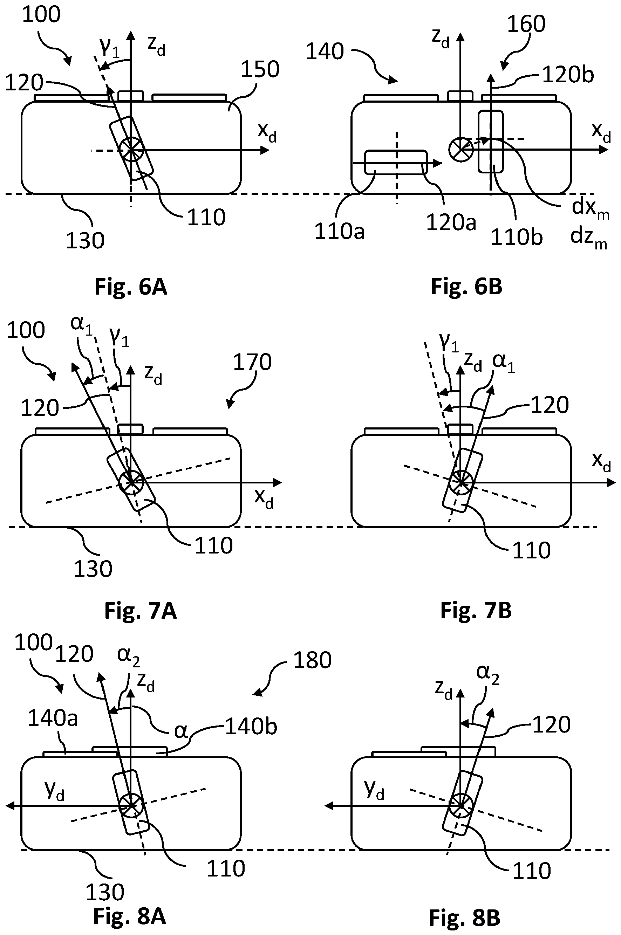

The method 600 may further comprise defining a user-borne device coordinate system (see, e.g., Figs. 6A to 8B). The device coordinate system may comprise a first device axis x_{d}, a second device axis y_{d} orthogonal to the first device axis x_{d}, and a vertical device axis z_{d}. The vertical device axis z_{d} may be orthogonal to a device contact surface or point 130 and/or orthogonal to a plane defined by the first device axis x_{d} and the second device axis y_{d}. The device contact surface or point 130 may be the part of the at least one user-borne device 100 which, during a user operation, may be in contact with the interaction surface 210. In the examples shown, e.g., in Fig. 1, the at least one user-borne device 100 may comprise a contact surface 130 contacting an interaction surface 210. In other examples, the at least one user-borne device 100 may comprise a contact point 130 (e.g., a stylus or other writing device comprising a writing tip which contacts an interaction surface 210 during a writing operation). In some embodiments, the at least one user-borne device 100 may be operated within a sensing volume M but not on an interaction surface 210. In this case, the at least one user-borne device 100 may be used, e.g., as a pointer. The pointer may be operable relative to an interaction surface 210 (e.g., pointing on a portion of the interaction surface 210), but being at a distance to the interactions surface 210 (i.e., having no contact with the interaction surface 210). In some embodiments, the device coordinate system may be defined within a geometric center of the at least one user-borne device 100.

The determined orientation may comprise a rotation and/or an inclination of the plurality of magnetometers 300 relative to the interaction reference coordinate system Xs, Ys, Zs. More specifically, the determined orientation and position may include an inclination, an orthogonal orientation, a parallel orientation, a rotation and/or a position of the plurality of magnetometers 300 relative to the interaction reference coordinate system Xs, Ys, Zs. More specifically, in case the interaction reference coordinate system Xs, Ys, Zs is defined on the interaction surface 210, the determined orientation and position may comprise a rotation and/or an inclination of the plurality of magnetometers 300 relative to the interaction surface 210. The rotation may be defined by at least one rotation axis R defined relative to the plurality of magnetometers 300, more specifically the measurement reference coordinate system Xm, Ym, Zm, and defined relative to the interaction reference coordinate system Xs, Ys, Zs. Determining an orientation and a position 630 may comprise determining an orientation and a position of the measurement reference coordinate system Xm, Ym, Zm relative to the interaction reference coordinate system Xs, Ys, Zs based on the obtained orientation data. More specifically, determining an orientation and a position 630 may comprise determining an orientation and a position of the second device part 532 relative to the first device part 531.

Referring to Figs. 3A to 5B, determining an orientation and a position 630 may comprise detecting a rotation 631 of the plurality of magnetometers 300, more specifically of the measurement reference coordinate system Xm, Ym, Zm, relative to the interaction reference coordinate system Xs, Ys, Zs, particularly relative to the first device part 532, based on the obtained orientation data. Additionally or alternatively, determining an orientation and a position 630 may comprise determining 632 an orientation angle β between the plurality of magnetometers 300, more specifically between the measurement reference coordinate system Xm, Ym, Zm, and the interaction reference coordinate system Xs, Ys, Zs, particularly the first device part 531, based on the obtained orientation data. In more detail, the rotation of the measurement reference coordinate system Xm, Ym, Zm to the interaction reference coordinate system Xs, Ys, Zs may be detected. The orientation angle β between the measurement reference coordinate system Xm, Ym, Zm and the interaction reference coordinate system Xs, Ys, Zs may be determined. As the plurality of magnetometers 300 is provided in the at least one second device part 532, a rotation of the at least one second device part relative to the first device part 531 may be detected. As the plurality of magnetometers 300 is provided in the at least one second device part 532, an orientation angle β between the at least one second device part 532 and the first device part 531 may be determined. In the embodiments shown in Figs. 3A to 4 (e.g., wherein the at least one second device part 532 is coupled to the first device part 531 via at least one hinge 533), the detected orientation angle β may be between 0° and 360°. In the embodiments shown in Figs. 5B (e.g., wherein the at least one second device part 532, more specifically the measurement bar, is coupled to the first device part 531, the detected orientation angle β may be 0°, 90°, 180° or 270°. In this case, the orientation angle β may depend on the position of the data and/or power transmission port 535 between the first device part 531 and the at least one second device part 532.

As shown in Figs. 3A to 4 and 5B, determining an orientation and a position 630 may comprise determining 633 a first normal vector N1 orthogonal to the interaction surface 210 based on the determined orientation angle β. More specifically, the first normal vector N1 may be parallel to the vertical interaction reference axis Zs. In some embodiments, the first device part 531 may comprise a top surface 534 and the first normal vector N1 may be defined on the top surface 534. Determining 633 a first normal vector N1 orthogonal to the interaction surface 210 may comprise defining a second normal vector N2 associated with the at least one second device part 532. The second normal vector N2 may be substantially parallel to the vertical measurement reference axis Zm of the measurement reference coordinate system Xm, Ym, Zm and/or to a side surface of the at least one second device part 532. Determining 633 a first normal vector N1 orthogonal to the interaction surface 210 may comprise obtaining position data of a rotation axis R between the measurement reference coordinate system Xm, Ym, Zm, more specifically the at least one second device part 532, and the interaction reference coordinate system Xs, Ys, Zs, more specifically the first device part 531. Determining 633 a first normal vector N1 orthogonal to the interaction surface 210 may comprise calculating the first normal vector N1 based on the obtained position data and the determined orientation angle β. The first normal vector N1 may be calculated by applying Rodrigues' rotation formula. Calculating the first normal vector N1 may be based on the defined second normal vector N2, the determined orientation angle β, and the obtained rotation axis R position data. As shown in Fig. 3A, the second normal vector N2 may extend from a second position point P2 defined on the at least one second device part 532, which may be at a second distance l2 to the at least one rotation axis R. The second distance l2 and/or the second position point P2 may be obtained from a data base. The first normal vector N1 may extend from a first position point P1 (e.g., on a top surface 534 of the first device part 531), which may be at a first distance l1 to the at least one rotation axis R. The first distance l1, the first position point P1, and the first normal vector N1 may be determined based on applying Rodrigues' rotation formula.

Referring to the embodiment shown in Fig. 3A and as outlined above, the at least one orientation sensor 520 may comprise an angle sensor arranged between the at least one second device part 532 and the first device part 531. In this case, the obtained orientation data may comprise angle sensor measurement data. Angle sensor measurement data may be indicative of a rotation and/or an orientation of the at least one second device part 532 relative to the first device part 531. Based on angle sensor measurement data, the rotation may be detected and/or the orientation angle β may be determined.

Referring to the embodiment shown Fig. 3B and as outlined above, the at least one orientation sensor 520 may comprise at least one magnetic object 521 arranged in the first device part 531 and one or more of the plurality of magnetometers 300 arranged in the at least one second device part 532. More specifically, the at least one magnetic object 110 coupled to the at least one user-borne device 100 may be at least one first magnetic object 110. The at least one magnetic object 521 arranged in (and/or coupled to) the first device part 531 may be at least one second magnetic object 521. It should be understood that the determination of the absolute magnetic object location 641 as described below for the at least one magnetic object 110 coupled to the at least one user-borne device 100 can be applied analogously for determining an absolute magnetic object location of the at least one magnetic object 521 arranged in (and/or coupled to) the first device part 531. The absolute magnetic object location of the at least one magnetic object 521 may be indicative of an absolute magnetic object position and/or an absolute magnetic object orientation of the at least one magnetic object 521 relative to the measurement reference coordinate system Xm, Ym, Zm. More specifically, the obtained orientation data may comprise magnetic field measurement data associated with the at least one magnetic object 521 arranged in the first device part 531 and measured with the one or more magnetometers of the plurality of magnetometers 300. Based on a rotation of the at least one second device part 532 relative to the first device part 531, the magnetic field of the at least one magnetic object 521 may be measured and magnetic field measurement data may be used to determine the orientation and position. Magnetic field measurement data associated with the at least one magnetic object 521 may be indicative of a rotation and/or an orientation of the at least one second device part 532 relative to the first device part 531. Based on magnetic field measurement data associated with the at least one magnetic object 521, the rotation may be detected and/or the orientation angle β may be determined.

Referring to the embodiment shown Fig. 3D and as outlined above, the at least one orientation sensor 520 may comprise at least one accelerometer arranged in the at least one second device part 532 and/or the first device part 531. The obtained orientation data may comprise accelerometer measurement data as described above. Accelerometer measurement data may be indicative of a rotation and/or an orientation of the at least one second device part 532 relative to the first device part 531. In embodiments, an accelerometer may be arranged in the at least one second device part 532 and another accelerometer may be arranged in the first device part 531. The accelerometer measurement data of the respective accelerometers may be compared to each other. The (compared) accelerometer measurement data may be indicative of a rotation and/or an orientation of the at least one second device part 532 relative to the first device part 531. Based on the accelerometer measurement data, the rotation may be detected and/or the orientation angle β may be determined.

Referring to the embodiment shown Fig. 3E and as outlined above, the plurality of magnetometers 300 may be a first plurality of magnetometers 300a. The obtained magnetic field measurements (measured with the plurality of magnetometers 300) may be first magnetic field measurements. The electronics device 500 may comprise a second plurality of magnetometers 300b. The second plurality of magnetometers 300 may be arranged in the first device part 531. The computer-implemented method 600 may further comprise obtaining second magnetic field measurements associated with the at least one magnetic object 110 with the second plurality of magnetometers 300b. The at least one orientation sensor 520 may comprise the first plurality of magnetometers 300a and the second plurality of magnetometers 300b. The obtained orientation data may comprise first magnetic field measurement data associated with the at least one magnetic object 110 from the first plurality of magnetometers 300a and second magnetic field measurement data associated with the at least one magnetic object 110 from the second plurality of magnetometers 300b. More specifically, first magnetic field measurement data and second magnetic field measurement data may be evaluated and/or compared to each other. The (evaluated and/or compared) first magnetic field measurement data and/or second magnetic field measurement data associated with the at least one magnetic object 100 may be indicative of a rotation and/or an orientation of the at least one second device part 532 relative to the first device part 531. Based on first magnetic field measurement data and/or second magnetic field measurement data associated with the at least one magnetic object 100, the rotation may be detected and/or the orientation angle β may be determined. In some embodiments, detecting a rotation 631 and/or determining 632 an orientation angle β, more specifically evaluating and/or comparing first magnetic field measurement data and second magnetic field measurement data, may comprise determining an absolute magnetic object location indicative of an absolute magnetic object position and/or an absolute magnetic object orientation of the at least one magnetic object 110 relative to the measurement reference coordinate system Xm, Ym, Zm and based on the obtained orientation data. A first absolute magnetic object location of the at least one magnetic object 110 may be determined relative to the first plurality of magnetometers 300b, and a second magnetic object location of the at least one magnetic object 110 may be determined relative to the second plurality of magnetometers 300b. Determining an orientation and a position 630 may be based on the first and second magnetic object locations. In this embodiment, the electronics device 500 may comprise (or may be) a board, a foldable smartphone or a foldable tablet. The board may be e.g., a whiteboard, a blackboard, a digital board (on which a stylus may be operated), a drawing and/or writing board, or a presentation board. In embodiments, the first device part 531 may be connected to a wall or a stand, and the at least one second device part 532 may be rotatably coupled to the first device part 531.

As indicated in the embodiment of Fig. 4 and as outlined above, the at least one orientation sensor 520 may comprise the plurality of magnetometers 310. The obtained orientation data may comprise magnetic field measurement data associated with the at least one magnetic object 110. Magnetic field measurement data associated with the at least one magnetic object 110 may be indicative of an interaction surface normal N3, more specifically in an initial state of the at least one user-borne device 100 (the initial state will be described in detail below). In the initial state, the at least one magnetic object 110 may be arranged in the at least one user-borne device 100 parallel to the vertical device axis z_{d}. The magnetic object moment vector 120 may be arranged orthogonal with respect to the interaction surface 210 and/or parallel to the vertical device axis z_{d} in the initial state of the at least one user-borne device 100. This may be the case when the at least one user-borne device 100 is operated on the interaction surface 210 and comprises a contact surface 130 relative to the interaction surface 210. Detecting a rotation 631 and/or determining 632 an orientation angle β, more specifically evaluating magnetic field measurement data, may comprise determining an absolute magnetic object location indicative of an absolute magnetic object position and/or an absolute magnetic object orientation of the at least one magnetic object 110 relative to the plurality of magnetometers 300, more specifically to the measurement reference coordinate system Xm, Ym, Zm, and based on the obtained orientation data. The absolute magnetic object location may include a magnetic object moment vector 120 and/or a magnetic object position vector associated with the at least one magnetic object 110. Based on the magnetic field measurement data associated with the at least one magnetic object 110, more specifically the magnetic object moment vector 120 and/or a magnetic object position vector associated with the at least one magnetic object 110, the rotation may be detected and/or the orientation angle β may be determined.

In embodiments, the computer-implemented method 600 may further comprise, in response to detecting a rotation 633, determining at least one rotation trigger event 634 associated with the detected rotation. The electronics device 500 may comprise a sleep mode and an active mode. Determining at least one rotation trigger event 634 may comprise determining a sleep mode event in response to detecting a rotation 633 in a first direction (e.g., a clockwise rotation about the rotation axis R). The sleep mode event may cause a transition of the electronics device 500 from an active mode to the sleep mode. Additionally or alternatively, determining at least one rotation trigger event 634 may comprise determining an active mode event in response to detecting a rotation 633 in a second direction (e.g., a counter-clockwise rotation about the rotation axis R). The active mode event may cause a transition of the electronics device 500 from the sleep mode to the active mode. The electronics device 500 may comprise a specific threshold orientation angle associated with the orientation of the at least one second device part 532 relative to the first device part 531 at which the respective mode may be activated. The sleep mode may be a power save mode of the electronics device 500. In this case, the electronics device 500 may comprise (or may be) a notebook, a laptop, a foldable smartphone, a foldable tablet, and/or an electronic device sleeve.

In embodiments, determining an orientation and a position 630 may comprise determining an interaction surface location 650. The interaction surface location may be indicative of an interaction surface position, an interaction surface orientation and/or an interaction surface distance c relative to the electronics device 500, more specifically to the first device part 531. As indicated in the Figs. 3A to 3E and 5B, the interaction surface distance c may be measured between the interaction surface 210 and the top surface 534. The interaction surface location 650 may be defined based on a first set of geometric parameters associated with the interaction surface 210, more specifically wherein the first set of geometric parameters may be indicative of a geometry of the interaction surface 210. The first set of geometric parameters may comprise predefined geometric parameters associated with the interaction surface 210. The first set of parameters may be obtained from a database. Determining an interaction surface location 650 may comprise deriving a first interaction surface configuration 210a being indicative of a location of the interaction surface 210 substantially parallel to and on the electronics device 500, more specifically on the top surface 534 of the first device part 531. In some embodiments, determining an interaction surface location 650 may comprise deriving a second interaction surface configuration 210b being indicative of a location of the interaction surface 210 substantially parallel to and distanced to the electronics device 500, more specifically to the top surface 534 of the first device part 531. The distance may be interaction surface distance c as described above. As the location of the interaction surface 210 relative to the first device part 531 may be known and the orientation of the first device part 531 relative to the at least one second device part 532 (in which the plurality of magnetometers 300 is arranged) may be determined, it is possible to determine the position and orientation of the plurality of magnetometers 300 relative to the interaction reference coordinate system Xs, Ys, Zs, more specifically to the interaction surface 210.

As indicated in Fig. 12, determining a user-borne device location 640 may comprise determining an absolute magnetic object location 641. The absolute magnetic object location may be indicative of an absolute magnetic object position and/or an absolute magnetic object orientation of the at least one magnetic object 110 relative to the plurality of magnetometers 300, more specifically to the measurement reference coordinate system Xm, Ym, Zm. More specifically, the absolute magnetic object location may be determined based on the obtained magnetic field measurements. The obtained magnetic field measurements may be indicative of a magnetic field associated with the at least one magnetic object 110. In embodiments, determining an absolute magnetic object location 641 may comprise generating magnetic field measurement data 642 based on the obtained magnetic field measurements. The magnetic field measurement data may be indicative of a magnetic field position, a magnetic field orientation and/or a magnetic field strength relative to the measurement reference coordinate system Xm, Ym, Zm. Determining an absolute magnetic object location 641 may further comprise processing magnetic field measurement data 643 to relate magnetic field measurement data to an absolute magnetic object location (i.e., the absolute magnetic object location as described above).

The absolute magnetic object location may include a magnetic object moment vector 120 and/or a magnetic object position vector associated with the at least one magnetic object 110. The magnetic moment vector 120 may be indicative of a magnetic object orientation and/or a magnetic field strength of the least one magnetic object 110 with respect to the measurement reference coordinate system Xm, Ym, Zm. The magnetic object position vector may be indicative of a magnetic object position with respect to the measurement reference coordinate system Xm, Ym, Zm. The absolute magnetic object orientation may be defined by a first set of magnetic object inclination angles δ1, δ2, δ3 measured between the measurement reference coordinate system Xm, Ym, Zm (and/or in some embodiments the magnetometer plane 310) and a projection of the magnetic moment vector 120 on (or relative to) the measurement reference coordinate system Xm, Ym, Zm (and/or in some embodiments the magnetometer plane 310). In some embodiments, the absolute magnetic object orientation may be defined by a first set of cartesian coordinates defined within the measurement reference coordinate system Xm, Ym, Zm. The first set of magnetic object orientation angles δ₁, δ₂, δ₃ may be measured relative to the measurement reference coordinate axes Xm, Ym, Zm, more specifically between or a projection of the magnetic object moment vector 120 and the respective axes Xm, Ym, Zm of the measurement reference coordinate system Xm, Ym, Zm. For example, as shown in Fig. 2, the first magnetic object orientation angle δ₁ may be defined between the first measurement reference axis Xm and the projection of the magnetic object moment vector 120, more specifically in the Xm-Zm-plane. The magnetic object moment vector 120 and/or the magnetic object position vector may be determined based on the obtained magnetic field measurements. The magnetic object moment vector 120 and/or the magnetic object position vector may be determined based on an implementation of a mathematical model associating each measurement of a magnetometer of the plurality of magnetometers 300 with a location of the at least one magnetic object 110 in the measurement reference coordinate system Xm, Ym, Zm. The model may be typically constructed from physical equations of electromagnetism, more specifically equations of magnetostatics. To establish this model, the at least one magnetic object 110 may be approximated by a magnetic dipole. Each magnetometer of the plurality of magnetometers 300 may be a vector magnetometer and may be configured to measure the magnetic field in one, two or three dimensions as described above.

Referring to Fig. 12, determining a user-borne device location 640 may comprise determining a relative magnetic object location 644 indicative of a relative magnetic object position and/or a relative magnetic object orientation of the at least one magnetic object 110 relative to the at least one user-borne device 110, more specifically to the device coordinate system. The relative magnetic object orientation may be defined based on a second set of magnetic object inclination angles γ1, γ2, γ3. More specifically, the second set of inclination angles γ1, γ2, γ3 may be measured between the magnetic object moment vector 120 and the respective axes of the device coordinate system (see, e.g., Figs. 6A, 7A and 7B). Determining a relative magnetic object location 644 may be based on the absolute magnetic object location as described above and a second set of geometric parameters. The second set of geometric parameters may comprise predefined geometric parameters indicative of a geometric position and/or a geometric orientation of the at least one magnetic object 100 relative to the at least one user-borne device 100, more specifically in an initial state of the at least one user-borne device 100 (the initial state will be described in more detail below). The second set of geometric parameters may be obtained from a database. In other words, based on the determined absolute location of the at least one magnetic object 110 and the knowledge of the arrangement of the at least one magnetic object 110 in the at least one user-borne device 100 (more specifically relative to the device coordinate system), the user-borne device location may be known.

In embodiments, determining a relative magnetic object location 644 may comprise detecting a position and/or orientation deviation 645 of the relative magnetic object position and/or a relative magnetic object orientation caused by a translation and/or a rotation of the at least one magnetic object 110 relative to the at least one user-borne device 100, more specifically wherein the at least one user-borne device 100 may be in an actuated state. As mentioned above, the device coordinate system may be defined in a geometric center of the user-borne device 100. In the initial state, the at least one magnetic object 110 may be in an initial location, e.g., inclined and/or distanced with respect to the device coordinate system and/or to the geometric center of the at least one user-borne device 100. The at least one user-borne device 100 may be in an actuated state, when the at least one magnetic object 110 is in an actuated location relative to the initial location (and/or relative to the at least one user-borne device 100 and/or to the housing 150). In other words, the at least one user-borne device 100 may be in an actuated state, when the at least one magnetic object 110 is rotated and/or translated relative to the at least one user-borne device 100, more specifically from the initial location. In the actuated state, the magnetic object orientation and/or the magnetic object position of the at least one magnetic object 110 relative to the device coordinate system may be different compared to the initial state. As indicated in Fig. 12, the method 600 may comprise, in response to detecting the position and/or orientation deviation, determining at least one interaction trigger event 646 associated with the position and/or the orientation deviation. Based on the detected specific translation and/or rotation, the method 600 may comprise transforming the detected position and/or orientation deviation to an interaction trigger event associated with the respective translation and/or rotation. In an example, the method 600 may obtain data from a database. The database may comprise data associating the at least one interaction trigger event with a specific translation and/or rotation of the at least one magnetic object 110 from the initial location to the actuated location. Examples of the at least one interaction trigger event will be described in detail below.

The determined user-borne device location may comprise a user-borne device position and/or a user-borne device orientation of the at least one user-borne device 100 relative to the interaction reference coordinate system Xs, Ys, Zs, more specifically relative to the interaction surface 210. In some embodiments, determining an absolute magnetic object location 641 may comprise determining, based on the magnetic object moment vector 120 and/or the magnetic object position vector, whether the at least one magnetic object 110 is located on a side of the measurement reference coordinate system Xm, Ym, Zm facing towards a user U during operation of the at least one user-borne device 100 and/or the electronics device 500, or, on a side of the measurement reference coordinate system Xm, Ym, Zm facing away from a user U during operation of the at least one user-borne device 100 and/or the electronics device 500 (see, e.g., Fig. 4). More specifically this may be defined relative to the magnetometer plane 310 and/or the second device part 532. Determining an absolute magnetic object location 641 may comprise determining, based on the magnetic object moment vector 120 and/or the magnetic object position vector, whether the at least one magnetic object 110 is located on a side of the magnetometer plane 310 facing towards a user U during operation of the at least one user-borne device 100 and/or the electronics device 500, or, on a side of the magnetometer plane 310 facing away from a user U during operation of the at least one user-borne device 100 and/or the electronics device 500. In other words, based on these features, it may be determined whether the at least one user-borne device 100 is operated in front or behind the second device part 532, more specifically in front or behind the magnetometer plane 310.

In embodiments, determining a user-borne device location 640 may comprise deriving the magnetic object moment vector 120 and/or the magnetic object position vector from the absolute magnetic object location. Determining a user-borne device location 640 may further comprise deriving the determined interaction surface location relative to the electronics device 500. Determining a user-borne device location 640 may further comprise determining a first virtual intersection point of a projection of the magnetic object moment vector 120 and the interaction surface 210.

In some embodiments, determining a user-borne device location 640 may comprise assuming a user-borne device contact 646 between the at least one user-borne device 100 and the interaction surface 210. More specifically, assuming a user-borne device contact 646 may comprise determining a second virtual intersection point between the vertical device axis z_{d} and the interaction surface 210. Assuming a user-borne device contact 646 between the at least one user-borne device 100 and the interaction surface 210 may be based on the determined interaction surface location and the determined relative magnetic object location. Furthermore, assuming a user-borne device contact 646 between the at least one user-borne device 100 and the interaction surface 210 may be based on the determined absolute magnetic object location and/or the determined position and orientation.

As indicated in Figs. 11 and 12, the computer-implemented method may further comprise representing 660 the at least one user-borne device 100 as a virtual object on the at least one output device 510 (and/or the at least one additional output device) based on the determined user-borne device location. More specifically, a movement of the virtual object on the at least one output device 510 may be based on a virtual reproduction of the location of the at least one user-borne device 100 relative to the interaction reference coordinate system Xs, Ys, Zs, more specifically relative to the interaction surface 210. A manipulation of the user-borne device location during a user operation may thus be represented as a virtual object on the at least one output device 510 (and/or the at least one additional output device). In embodiments, the at least one user-borne device 100 may be visually reproduced as a virtual object. In embodiments, the at least one output device 510 (and/or the at least one additional output device) may be configured to visually reproduce the virtual object. Representing 660 the at least one user-borne device 100 may comprise reproducing a movement of the at least one user-borne device 100 within the sensing volume M as a movement of the virtual object on the at least one output device 510. The movement of the at least one user-borne device 100 within the sensing volume M may be caused by a manipulation of the user-borne device 100 during a user operation (i.e., by a user manipulating the location of the at least one user-borne device 100). In other words, the movement of the user-borne location may be determined and reproduced as a movement of the virtual object on the at least one output device 510 (and/or the at least one additional output device). The visual reproduction may be a motion of a cursor on the at least one output device 510 (and/or the at least one additional output device). In embodiments, the visual reproduction may not be identical to the design of the at least one user-borne device 100 but may be any icon (e.g., an arrow, a picture). In embodiments, the visual reproduction may be a drawing or letters. In other embodiments, the visual reproduction may be a color change and/or a brightness change of the at least one output device 510 (e.g., the at least one output device 510 may become brighter or darker). In embodiments, the at least one output device 510 (and/or the at least one additional output device) may be a visual screen or a display. In some embodiments, the at least one output device 510 (and/or the at least one additional output device) may be a light indicator device or an audio device.

The computer-implemented method 600 may further comprise initializing the plurality of magnetometers 300 and the at least one user-borne device 100, more specifically when a user starts a user operation. In embodiments, the at least one user-borne device 100 may be tracked over a time period comprising multiple time samples. At each time sample, the computer-implemented method 600 may comprise determining the user-borne device location 640, and may store the determined locations (or interactions) for each time sample.

In embodiments, the computer-implemented method 600 may further comprise applying a filter for filtering the determined user-borne device location. Magnetic and electronic noise, as well as environmental variations may lead to non-smooth location determinations over time. Based on the filtering, a smooth location trajectory of the at least one user-borne device 100 relative to the measurement reference coordinate system Xm, Ym, Zm and/or to the interaction reference coordinate system Xs, Ys, Zs may be achieved. The filter may be a low-pass filter or a Kalman filter, more specifically an extended Kalman filter or an unscented Kalman filter. The filter may use the magnetic field measurements of the plurality of magnetometers 300 as an input and may implement the mathematical model as described above to approximate the at least one magnetic object 110 by a magnetic dipole.

The above-described computer-implemented method 600 can comprise or be executable via a computer or a network of computers, the computer or network of computers comprising at least one processing unit (e.g., a processor) and at least one data storage (i.e., memory). The described procedural logic may be held in the form of executable code in at least one data storage and executed by the at least one processing unit. The systems and subsystems may send data to the at least one processing unit and, in examples, they may also receive instructions from the at least one processing unit. The processing unit may thereby direct user-initiated and/or automatically generated queries to the system 10 and/or the electronics device 500. The system 10 and/or the electronics device 500 is not limited to a particular hardware environment. Thus, distributed devices coupled via a network may perform the techniques described herein. The disclosure also includes electrical signals and computer-readable media defining instructions that, when executed by a processing unit, implement the techniques described herein. As described above, the system 10 and/or the electronics device 500 may comprise at least one database. Alternatively, or in addition, the system 10 and/or the electronics device 500 may access a database in a cloud (via a communication interface). The system 10 and/or the electronics device 500 may comprise a (at least one) communication interface to couple to plurality of magnetometers, the processing unit and/or the database. The communication interface may comprise one or more of a network, internet, a local area network, a wireless local area network, a broadband cellular network, and/or a wired network. In examples, the system 10 and/or the electronics device 500 may couple to one or more features via a server hosted in a cloud.

According to an aspect of the present disclosure, a computer system may be configured to execute the computer-implemented method 600 as described above. According to another aspect of the present disclosure a computer program may be configured to execute the computer-implemented method 600 as described above. Furthermore, a computer-readable medium or signal storing the computer program may be provided.

The system 10 and/or the electronics device may be configured to track a movement of the at least one magnetic object 110 and/or the at least one user-borne device 100 in at least five degrees of freedom. The at least five degrees of freedom may include a translation of the at least one magnetic object 110 along the first measurement reference axis Xm, the second measurement reference axis Ym and the vertical measurement reference axis Zm, a first rotation about a first rotation axis, and a second rotation about a second rotation axis. In case the at least one user-borne device 100 is operated on an interaction surface 210, the system 10 and/or the electronics device 500 may be configured to assume a contact between the user-borne device 100 and the interaction surface 210. This may be done based on the determined user-borne device location as described above. During a user operation, the system 10 and/or the electronics device 500 may be configured to track a movement of the at least one user-borne device 100 within the sensing volume M and/or relative to the interaction surface 210 over a time period. More specifically the system 10 may be configured to determine a trajectory of the user-borne device 100 within the sensing volume M and/or relative to the interaction reference coordinate system Xs, Ys, Zs, more specifically the interaction surface 210. As already mentioned above, the at least one user-borne device 100 may be tracked over a time period comprising multiple time samples. At each time sample, the location of the at least one user-borne device 100 within the sensing volume M and/or relative to the interaction reference coordinate system Xs, Ys, Zs may be determined.

Referring to Fig. 10, a movement of the at least one user-borne device 100 on the interaction surface 210 is indicated. In this embodiment, the at least one user-borne device 100 may be a computer mouse. During a user operation, the at least one user-borne device 100 may be moved on the interaction surface 210 from a position x_{d}, y_{d}, to a position dx_{d}, dy_{d}. The system 10 and/or the electronics device 500 may be configured to track this movement based on determining the user-borne device location. As outlined above, the electronics device 500 may comprise a user interface configured to interact with a user U and/or receive a user input. The plurality of magnetometers 300 may be configured to receive data from and/or transmit data to the processing unit 400 and/or the external processing unit. The system 10 and/or the electronics device 500 may comprise a data storage connected to the processing unit 400. The data storage may comprise a primary data storage, e.g., a RAM, and a secondary data storage. The data storage may be integrated in and/or connected to the electronics device 500.

As indicated in Figs. 1, 2 and 10, the system 10 may comprise an interaction support 200 having an interaction support surface 230. The interaction surface 210 may be at least a partial surface of the interaction support surface 230. The interaction support 200 may not comprise ferromagnetic properties, e.g., ferromagnetic particles. In embodiments, the interaction support 200 may be a furniture (e.g., a table), an electronics device 500 as described above (e.g., a notebook, a laptop or a tablet), a screen, a wall, or a mouse pad. The interaction surface 210 may be defined based on the first set of geometric parameters associated with the interaction support 200. More specifically, the type of interaction support 200 may be known, e.g., a notebook or mouse pad. Such an interaction support 200 may be defined by the first set of geometric parameters as described above. A partial surface of the interaction support surface 230 may be used as interaction surface 210. The plurality of magnetometers 300 may be electrically (e.g., via wires or a data bus) or wirelessly connected to the processing unit 400, the external processing unit and/or to the electronics device 500.

Referring to Figs. 6A to 8B, the at least one user-borne device 100 may comprise a housing 150. The at least one magnetic object 110 may be arranged in the housing 150. In other embodiments, the at least one magnetic object 110 may be coupled to the housing 150. In an initial state of the at least one user-borne device 100, the relative magnetic object orientation relative to the at least one user-borne device 100 may be defined based on the second set of inclination angles γ₁, γ₂, γ₃ as described above. More specifically, the second set of inclination angles γ₁, γ₂, γ₃ may be measured between the magnetic moment vector 120 and the respective axes of the device coordinate system. In an example as shown in Figs. 6A and 7A, γ₁ may be measured between the vertical device axis z_{d} and the magnetic moment vector 120. In an initial state of the at least one user-borne device 100, the magnetic moment vector 120 may be inclined with respect to the vertical device axis z_{d}.

However, in other embodiments e.g., as indicated in Fig. 6B, in an initial state of the at least one user-borne device 100, the magnetic moment vector 120 may extend substantially parallel to the vertical device axis z_{d}. In an embodiment, in the initial state of the at least one user-borne device 100, the at least one magnetic object 110 may be arranged in the housing 150 such that the vertical device axis z_{d} extends through the magnetic moment vector 120. However, in other embodiments, in the initial state of the at least one user-borne device 100, the at least one magnetic object 110 may be arranged in the housing 150 such that the magnetic moment vector 120 is parallel but distanced to the vertical device axis z_{d} (see, e.g., Fig. 6B).

The at least one magnetic object 110 may be movable relative to the at least one user-borne device 100, more specifically wherein the at least one magnetic object 110 may be rotatable and/or translatable relative to the at least one user-borne device 100 (and/or to the housing 150). The at least one user-borne device 100 may be in an initial state, when the at least one magnetic object 110 is in an initial location relative to the at least one user-borne device 100, more specifically to the housing 150. In other words, the user-borne device 100 may be in an initial state, when the at least one magnetic object 110 is not rotated and/or translated relative to the at least one user-borne device 100. As mentioned above, the device coordinate system may be defined in a geometric center of the at least one user-borne device 100. In the initial state, the at least one magnetic object 110 may be inclined and/or distanced with respect to the device coordinate system and/or to the geometric center of the at least one user-borne device 100. The user-borne device 100 may be in an actuated state, when the at least one magnetic object 110 is in an actuated location relative to the initial location (and/or relative to the at least one user-borne device 100 and/or to the housing 150). In other words, the at least one user-borne device 100 may be in an actuated state, when the at least one magnetic object 110 is rotated and/or translated relative to the at least one user-borne device 100, more specifically from the initial location. In the actuated state, the magnetic object orientation and/or the magnetic object position of the at least one magnetic object 110 relative to the device coordinate system may be different compared to the initial state.

As shown in Fig. 6B, the at least one user-borne device 100 may comprise at least two magnetic objects 110a, 110b having different relative orientations to each other. The system 10 and/or the electronics device 500 may be configured to determine relative magnetic object orientations of each of the at least two magnetic objects 110a, 110b. More specifically, the system 10 and/or the electronics device 500 may be configured to determine a magnetic moment vector 120a, 120b of each of the at least two magnetic objects 110a, 110b. Furthermore, the system 10 and/or the electronics device 500 may be configured to determine a magnetic object position, a magnetic object orientation and/or a magnetic object distance of each of the at least two magnetic objects 110a, 110b relative to the reference coordinate system XYZ, more specifically the magnetometer plane 310, and/or to the interaction surface 210. As shown in Fig. 6B a first magnetic object 110a may comprise a first magnetic moment vector 120a. A second magnetic object 110b may comprise a second magnetic moment vector 120b. The first magnetic moment vector 120a may be inclined with respect to the second magnetic moment vector 120b. In the example shown in Fig. 6B, the first magnetic moment vector 120a may be substantially orthogonal to the second magnetic moment vector 120b. The first magnetic object 110a may be fixedly coupled to the at least one user-borne device 100. This means that the first magnetic object 110a may not be rotatable and/or translatable with respect to the at least one user-borne device 100. The first magnetic object 110b may be arranged in the housing 150. The second magnetic object 110b may be rotatable and/or translatable relative to the at least one user-borne device 100 and/or to the first magnetic object 110a. The system 10 and/or the electronics device 500 may be configured to track a movement of the at least two magnetic objects 110a, 110b in at least six degrees of freedom. In addition to the at least five degrees of freedom as defined above, the at least one user-borne device 100 comprising at least two magnetic objects 110a, 110b allows to determine a relative position and/or a relative orientation deviation of the two at least two magnetic objects 110a, 110b with respect to each other.

Fig. 6B illustrates a translation 160 of the at least one magnetic object relative to the device coordinate system from an initial location to an actuated location. In the example of Fig. 6B, a second magnetic object 110b may arranged in the housing 150, which is translated from an initial location to an actuated location. The second magnetic object 110b is translated in the direction of the first device axis x_{d} and in the direction of the vertical device axis z_{d}. Such a translation 160 from the initial location to the actuated location may be described by dxₘ and dzₘ as indicated in Fig. 6B. Although described only for the second magnetic object 110b, the features described above may analogously apply for the at least one magnetic object 110. In some embodiments, the at least one magnetic object 110 may be fixedly arranged in the housing 150. In this case, the at least one magnetic object 110 may not be translatable 160 and/or rotatable with respect to the at least one user-borne device 100 (and/or the housing 150).

Referring to Figs. 7A to 8B, a rotation of the at least one magnetic object 110 relative to the at least one user-borne device 100 and/or to the housing 150 is shown. In Figs. 7A and 7B, the at least one magnetic object 110 may be rotated by a first rotation 170 from the initial location to an actuated location about the second device axis y_{d}. It should be noted that in the embodiment of Fig. 7A, in the initial state, the at least one magnetic object 110 is inclined by angle γ1 measured between the magnetic moment vector 120 and the vertical device axis z_{d}. In other words, in its initial location, the at least one magnetic object 110 may be arranged inclined with respect to the vertical device axis z_{d}. As shown in Figs. 7A and 7B, the first rotation 170 may be defined by a first rotation angle α₁ measured between the initial location (i.e., an initial position and/or orientation of the magnetic moment vector in the initial state) and the magnetic moment vector 120. In Fig. 7A, the first rotation angle α₁ may comprise a positive value. In Fig. 7B the first rotation angle α₁ may comprise a negative value.

In the embodiment shown in Figs. 8A and 8B, in its initial location and/or state, the at least one magnetic object 110 may comprise a magnetic moment vector 120 which is parallel to the vertical device axis z_{d}. In other words, an inclination angle γ2 about the first device axis x_{d} may be zero. The at least one magnetic object 110 may be rotated by a second rotation 180 from the initial location to an actuated location about the first device axis x_{d}. Such a second rotation 180 may be defined by a second rotation angle α₂ measured between the vertical device axis z_{d} and the magnetic moment vector 120. In Fig. 8A, the second rotation angle α₂ may comprise a positive value, and in Fig. 8B the second rotation angle α₂ may comprise a negative value. Although not explicitly shown in the Figs., it should be understood that a combination of a rotation 170, 180 and/or a translation 160 as described above is also possible. The translation 160 of the at least one magnetic object 110 from the initial location to the actuated location is only shown in the example of Fig. 6B in the direction of the first device axis x_{d} and the vertical device axis z_{d}. However, any combination of translations with respect to the device axes x_{d}, y_{d}, z_{d} may be possible, more specifically along the first device axis x_{d}, the second device axis y_{d} and/or the vertical device axis z_{d}. The system 10 and/or the electronics device 500 may be configured to detect the translation 160 and/or rotation 170, 180 of the at least one magnetic object 110 relative to the at least one user-borne device 100.

As indicated in Figs. 2 and 6A to 8B, the at least one user-borne device 100 may comprise at least one manipulation feature 140, more specifically coupled to the housing 150. The at least one manipulation feature 140 may be translatable and/or rotatable with respect to the at least one user-borne device 100, more specifically to the housing 150. The at least one magnetic object 110 may be coupled to the at least one manipulation feature 140. More specifically, the at least one magnetic object 110 may be operationally, e.g., mechanically, coupled to the at least one manipulation feature 140. A translation and/or rotation of the at least one manipulation feature 140 relative to the housing 150 may cause a translation and/or a rotation of the at least one magnetic object 110 relative to the housing 150. The at least one manipulation feature 140 may be actuated by a user. In an initial state of the at least one user-borne device 100, the at least one manipulation feature 140 and/or the at least one magnetic object 110 may be in the initial location. In an actuated state of the at least one user-borne device 100, the at least one manipulation feature 140 and/or the at least one magnetic object 110 may be in the actuated location. In other words, in case the at least one manipulation feature 140 is not actuated by user, the user-borne device may be in the initial state. More specifically, in the initial state, the at least one manipulation feature 140 and/or the at least one magnetic object 110 may be in the initial location. In case the at least one manipulation feature 140 is actuated by user, the at least one user-borne device 100 may be in the actuated state. More specifically, in the actuated state, the at least one manipulation feature 140 and/or the at least one magnetic object 110 may be in the actuated location. Referring to the examples shown in Figs. 7A and 7B, an actuation of the at least one manipulation feature 140 may lead to the first rotation 170 about the second device axis y_{d} as described above. Depending on a direction of an actuation of the at least one manipulation feature 140, the first rotation angle α₁ may have a positive value or the negative value. Additionally or alternatively, referring to Figs. 8A and 8B, an actuation of the at least one manipulation feature 140 may lead to the second rotation 180 about the first device axis x_{d} as described above. Depending on a direction of an actuation of the at least one manipulation feature 140, the second rotation angle α₂ may have a positive value or a negative value. Referring to Fig. 6B, an actuation of the at least one manipulation feature 140 may lead to a translation 160 of the at least one magnetic object 110 along the first device axis x_{d}, the second device axis y_{d}, and/or the vertical device axis z_{d}. As defined above, the method 600 comprises detecting a position and/or orientation deviation 635. In embodiments, the detected orientation deviation may be the first rotation angle α₁ and/or the second rotation angle α₂.

The at least one user-borne device 100 may comprise a biasing element (not shown), configured to urge the at least one manipulation feature 140 and/or at least one magnetic object 110 from the actuated location to the initial location, more specifically when the at least one manipulation feature 140 is not actuated. More specifically, when a user actuates (e.g., applies a force on) the at least one manipulation feature 140, the at least one manipulation feature 140 and at least one magnetic object 110 may be moved from the initial location to the actuated location. In this case, the biasing element may be biased. When a user releases the force on the at least one manipulation feature 140, the at least one manipulation feature 140 and the at least one magnetic object 140 may be urged from the actuated location to the initial location.

The at least one manipulation feature 140 may be associated with at least one interaction trigger event. The system 10 and/or the electronics device 500 may be configured to determine the respective interaction trigger event based on a translation 160 and/or rotation 170, 180 of the at least one magnetic object 110 relative to the at least one user-borne device 100 as described above, more specifically caused by a translation of the at least one manipulation feature 140 being operationally coupled to the at least one magnetic object 110. In particular, the electronics device 500 and/or the system 10 may be configured to determine a position and/or rotation deviation between the initial location and the actuated location. In other words, a specific translation and/or rotation of the at least one magnetic object 110 relative to the at least one user-borne device 100 may be detectable by the system 10, more specifically by the electronics device 500. Based on the detected specific translation and/or rotation, the system 10 and/or the electronics device 500 may be configured to transform this movement to a trigger event associated with the translation and/or rotation. In an example, the system 10 and/or the electronics device 500 may be coupled to (and/or include) a database. The database may comprise data associating at least one interaction trigger event with a specific translation and/or rotation of the at least one magnetic object 110 from the initial location to the actuated location. The system 10 and/or the electronics device 500 may be configured to transmit to and/or receive data from the database. In the embodiments shown in Figs. 7A and 7B, the first rotation 170 may be associated with a first trigger event. In the embodiments shown in Figs. 8A and 8B, the second rotation 180 may be associated with a second trigger event. The respective trigger event may be, e.g., a click event, a scroll event, and/or a selection event. In case a plurality of magnetic objects is provided, additional trigger events may be determined based on a rotation and/or translation of the magnetic objects relative to each other and detectable by the system 10 and/or the electronics device 500. The at least one interaction trigger event may be initiated by a user manipulation of the at least one user-borne device 100, more specifically the at least one electrically and/or electronically passive user-borne device 100, within the sensing volume M. The at least one interaction trigger event may cause an action and/or may be used to control an action in a digital environment (i.e., an environment which is controlled by a computer or a network of computers), e.g., a virtual environment, based on a user input. More specifically, the at least one interaction trigger event may implement a user input on the at least one user-borne device 100 as an action in the digital environment. For instance, the at least one user-borne device 100 may be used together with the electronics device 500 which may be or may comprise e.g., a tablet, a cell phone, a smartphone, a laptop, a computer, a virtual reality (VR) set, a notebook, a foldable smartphone, a foldable tablet, an electronics device sleeve and/or a television. The at least one interaction trigger event may cause an action on the electronics device 500 and/or may be used to control an action on the electronics device 500 based on a user input on the at least one user-borne device 100.

As mentioned above, the at least one interaction trigger event may be a scroll event and/or a click event. A scroll event and/or a click event may be applied to various different application fields. A scroll event may trigger a scroll action in a digital environment, more specifically a virtual environment, based on a user input, e.g., "scroll up" and "scroll down" on a display. A scroll event may cause or provide a control of a rotational and/or translational movement of a virtual object in a digital environment, more specifically a virtual environment, that is associated with a user input. For instance, a scroll event may trigger a scroll action including scrolling of files or data, a rotational or translational movement of the virtual object associated with a selection of a choice from a plurality of choices. The scroll action may also include rotating a body in a virtual environment and/or changing a perspective in a virtual environment. Furthermore, a scroll action may include one or more of moving a cursor in two opposing directions (e.g., horizontal or vertical on an output device), moving a displayed element (e.g. a page, a cursor), which may be controlled by the at least one user-borne device 100, a step in a direction, flipping through a menu, flipping through a selection list, or adjusting (e.g. increasing or decreasing) a parameter (e.g. a setting or a configuration). A click event may trigger a click action (more specifically of a virtual object) in a digital environment, more specifically a virtual environment, based on a user input. A click event may include, e.g., a selection of an object (like a button, a file, an icon or another object), a selection of an item, a selection of a list, a selection of an item on a list. A click event may trigger a following action. A click event may trigger an action that provides additional information and/or properties of an object, an item or a text (e.g., letter, word, phrase) selected. A click event may trigger a single click action, a double click action, a triple click action, a right click action and/or a click-and-drag action within a digital environment, more specifically a virtual environment. A single click action may refer to selection of an object within a virtual environment. A double click action may open a file or execute a program within a virtual environment. A click-and-drag action may include clicking, holding and moving an object, e.g., which may be used to highlight or drag-select a text or an object. A triple click action may be used to select a paragraph of a text. A right click action may perform a special action, e.g., opening a list with additional information and/or properties for a selected object as mentioned above. The action that is triggered by the click event depends on the user's input on the at least one user-borne device 100. For example, the click event may cause a double-click action when a user provides two quick and successive inputs on the at least one user-borne device 100. The above-mentioned features enable various new application fields for the at least one user-borne device 100, for example a computer-mouse, a keyboard, a dial, a mouse scroll element (e.g. a wheel), a joystick, a control for an electronic device (e.g. an audio control or a visual control), a control of software settings or visualizations (e.g. graphic software or design software), or a control of a computer game.

**In** an example as shown in Figs. 2 and 6A to 8B, a first manipulation feature 140a may be provided and a second manipulation feature 140b may be provided. Each of the first and second manipulation features 140a, 140b may be operationally coupled to the at least one magnetic object 110. In this example, the at least one user-borne device 100 may be, e.g., a computer mouse. The first manipulation feature 140a may be a click manipulation feature and the second manipulation feature 140b may be a scroll manipulation feature. Actuating the first manipulation feature 140a may lead to the first rotation 170 of the at least one magnetic object 110. Depending on the direction of the actuation, the first rotation angle α₁ may comprise a positive value or a negative value. The system 10 and/or the electronics device 500 may be configured to detect the first rotation angle α₁ and may transform this rotation into a click event comprising a first click event or a second click event, depending on the first rotation angle value. The first click event may trigger a left click action more specifically a single click action, a double click action, a triple click action, and/or a click-and-drag action as described above. The second click event may trigger the right click action as described above. Actuating the second manipulation feature 140b may lead to the second rotation 180 of the at least one magnetic object 110. Depending on the actuation, the second rotation angle α₂ may comprise a positive value or a negative value. The system 10 and/or the electronics device 500 may be configured to detect the second rotation angle α₂ and may transform this rotation into a scroll event. The scroll event may comprise a first scroll event or a second scroll event. The respective scroll event may depend on the second rotation angle value. More specifically, the first rotation 170 may be associated with a click event. In case the first rotation angle α₁ has a positive value, this may be associated with a first click event. In case the first rotation angle α₁ has a negative value, this may be associated with a second click event. The second rotation 180 may be associated with a scroll event. In case the second rotation angle α₂ has a positive value, this may be associated with a first scroll event (e.g.. a "scroll up"). In case the second rotation angle α₂ has a negative value, this may be associated with a second scroll event (e.g., a "scroll down").

The above features have been described with respect to at least one user-borne device 100. In some embodiments, more than one user-borne devices 100 may be provided and operated (e.g., manipulated by a user U) within the sensing volume M created by the plurality of magnetometers 300. The computer-implemented method 600, the electronics device 500 and the system 10 according to the present disclosure have been described for the at least one user-borne device 100. The features as described above may also be applicable to every additional or other user-borne device 100 operated within the sensing volume M. Furthermore, more than one electronics device 500 may be provided and operated together with the at least one user-borne device 100 as described above and any additional user-borne device 100. **In** case more than one electronics device 500 is provided, the features as described above according to aspects of the present disclosure may also be applicable to every additional or other electronics device 500.

### REFERENCE NUMERALS

- Xm: first measurement reference axis
- Ym: second measurement reference axis
- Zm: vertical measurement reference axis
- Xs: first interaction reference axis
- Ys: second interaction reference axis
- Zs: vertical interaction reference axis
- x_{d}: first device axis
- y_{d}: second device axis
- z_{d}: vertical device axis
- 10: system
- 100: user-borne device
- 110: at least one magnetic object
- 120: magnetic moment vector
- 130: contact surface or point
- 140: at least one interaction feature
- 150: housing
- 160: translation of magnetic object
- 170: first rotation
- 180: second rotation
- 200: interaction support
- 210: interaction surface

- 210a: first interaction surface configuration
- 210b: second interaction surface configuration

- 230: interaction support surface
- 300: plurality of magnetometers
- 310: magnetometer plane

- 320: magnetometer body
- 400: processing unit
- 500: electronics device
- 510: at least one output device
- 520: at least one orientation sensor
- 521: magnetic sensor object
- 530: device body
- 531: first device part
- 532: second device body
- 533: hinge
- 534: top surface
- 535: data and/or power transmission port
- 536: output device part
- 537: auxiliary device part
- 538: third device part
- U: user
- M: sensing volume
- N1: first normal vector
- N2: second normal vector
- N3: third normal vector
- α₁: first rotation angle
- α₂: second rotation angle
- S_{k,l}: magnetometer
- δ₁, δ₂, δ₃: first set of inclination angles
- γ₁, γ₂, γ₃: second set of inclination angles
- β: orientation angle

## Claims

1. A computer-implemented method (600) for determining a location of at least one user-borne device (100), comprising:
- obtaining magnetic field measurements (610) associated with at least one magnetic object (110) with a plurality of magnetometers (300), wherein the at least one magnetic object (110) is coupled to at least one user-borne device (100), and wherein the at least one user-borne device (100) is associated with an interaction reference coordinate system (Xs, Ys, Zs),
- obtaining orientation data (620) from at least one orientation sensor (520), wherein the at least one orientation sensor (520) is arranged in an electronics device (500), and wherein the plurality of magnetometers (300) is arranged in the electronics device (500),
- determining an orientation and a position (630) of the plurality of magnetometers (300) relative to the interaction reference coordinate system (Xs, Ys, Zs) based on the obtained orientation data, and
- determining a user-borne device location (640) relative to the interaction reference coordinate system (Xs, Ys, Zs) based on the obtained magnetic field measurements and the determined orientation and position.

2. The computer-implemented method (600) according to claim 1, wherein the at least one user-borne device (100) is operable on an interaction surface (210), more specifically wherein a vertical interaction reference axis (Zs) of the interaction reference coordinate system (Xs, Ys, Zs) is orthogonal to the interaction surface (210).

3. The computer-implemented method (600) according to claim 1 or claim 2, comprising: defining a measurement reference coordinate system (Xm, Ym, Zm) relative to the plurality of magnetometers (300), more specifically wherein the measurement reference coordinate system (Xm, Ym, Zm) is associated with a location of at least one magnetometer of the plurality of magnetometers (300).

4. The computer-implemented method (600) according to any one of the preceding claims, wherein the determined orientation comprises a rotation and/or an inclination of the plurality of magnetometers (300) relative to the interaction reference coordinate system (Xs, Ys, Zs).

5. The computer-implemented method (600) according to any one of the preceding claims, wherein the electronics device (500) comprises a first device part (531) and at least one second device part (532) coupled to the first device part (531), more specifically wherein the plurality of magnetometers (300) is provided in the at least one second device part (532), particularly wherein determining an orientation and a position (630) comprises determining an orientation and a position of the second device part (532) relative to the first device part (531).

6. The computer-implemented method (600) according to claim 5, wherein determining an orientation and a position (630) comprises:
detecting a rotation (631) of the plurality of magnetometers (300), more specifically of a measurement reference coordinate system (Xm, Ym, Zm), relative to the interaction reference coordinate system (Xs, Ys, Zs), particularly relative to the first device part (532), based on the obtained orientation data, and/or
determining (632) an orientation angle (β) between the plurality of magnetometers (300), more specifically between a measurement reference coordinate system (Xm, Ym, Zm), and the interaction reference coordinate system (Xs, Ys, Zs), particularly the first device part (531), based on the obtained orientation data.

7. The computer-implemented method (600) according to claim 5 or claim 6, wherein determining an orientation and a position (630) comprises:
determining an interaction surface location (650), wherein the interaction surface location is indicative of an interaction surface position, an interaction surface orientation and/or an interaction surface distance (c) relative to the electronics device (500), more specifically to the first device part (531).

8. The computer-implemented method (600) according to any one of claims 5 to 7, wherein the at least one second device part (532) is rotatably coupled to the first device part (531), more specifically wherein the at least one second device part (532) is rotatably coupled via at least one hinge (533) defining at least one rotation axis (R) to the first device part (531), particularly wherein the at least one second device part (532) comprises at least one output device (510).

9. The computer-implemented method (600) according to any one of claims 5 to 7, wherein the at least one second device part (532) comprises an output device part (536) and at least one auxiliary device part (537), more specifically wherein the output device part (536) is rotatably coupled via at least one hinge (533) defining at least one rotation axis (R) to the first device part (531), and wherein the at least one auxiliary device part (537) is releasably coupled to the first device part (531) at least via a data and/or power transmission port (535).

10. The computer-implemented method (600) according to any one of claims 5 to 7, wherein the at least one second device part (532) is releasably coupled to the first device part (531) at least via a data and/or power transmission port (535), more specifically wherein the first device part (531) comprises at least one output device (510).

11. The computer-implemented method (600) according to any one of the preceding claims, wherein determining a user-borne device location (640) comprises:
determining an absolute magnetic object location (641) indicative of an absolute magnetic object position and/or an absolute magnetic object orientation of the at least one magnetic object (110) relative to a measurement reference coordinate system (Xm, Ym, Zm), more specifically wherein the absolute magnetic object location is determined based on the obtained magnetic field measurements.

12. The computer-implemented method (600) according to any one of the preceding claims, wherein determining a user-borne device location (640) comprises:
determining a relative magnetic object location (644) indicative of a relative magnetic object position and/or a relative magnetic object orientation of the at least one magnetic object (110) relative to the at least one user-borne device (110), more specifically to a device coordinate system.

13. The computer-implemented method (600) according to any one of the preceding claims, wherein the at least one user-borne device (100) is electrically and/or electronically passive.

14. An electronics device (500) for determining a location of at least one user-borne device (100), comprising:
a plurality of magnetometers (300), and
at least one orientation sensor (520),
wherein the electronics device (500) is configured to execute a computer-implemented method (600) according to any one of the preceding claims.

15. A system (10) for determining a location of at least one user-borne device (100), comprising:
at least one user-borne device (100) associated with an interaction reference coordinate system (Xs, Ys, Zs), wherein the at least one user-borne device (110) comprises at least one magnetic object (110), and
an electronics device (500) according to claim 14.

## Patentansprüche

1. Computerimplementiertes Verfahren (600) zum Bestimmen eines Standorts von mindestens einer benutzergetragenen Vorrichtung (100), umfassend:
- Erhalten von Magnetfeldmessungen (610), die mindestens einem Magnetobjekt (110) zugeordnet sind, mit einer Vielzahl von Magnetometern (300), wobei das mindestens eine Magnetobjekt (110) mit mindestens einer benutzergetragenen Vorrichtung (100) gekoppelt ist und wobei die mindestens eine benutzergetragene Vorrichtung (100) einem Interaktionsreferenzkoordinatensystem (Xs, Ys, Zs) zugeordnet ist,
- Erhalten von Orientierungsdaten (620) von mindestens einem Orientierungssensor (520), wobei der mindestens eine Orientierungssensor (520) in einer Elektronikvorrichtung (500) angeordnet ist und wobei die Vielzahl von Magnetometern (300) in der Elektronikvorrichtung (500) angeordnet ist,
- Bestimmen einer Orientierung und einer Position (630) der Vielzahl von Magnetometern (300) relativ zu dem Interaktionsreferenzkoordinatensystem (Xs, Ys, Zs) basierend auf den erhaltenen Orientierungsdaten und
- Bestimmen eines Standorts (640) der benutzergetragenen Vorrichtung relativ zu dem Interaktionsreferenzkoordinatensystem (Xs, Ys, Zs) basierend auf den erhaltenen Magnetfeldmessungen und der bestimmten Orientierung und Position.

2. Computerimplementiertes Verfahren (600) nach Anspruch 1, wobei die mindestens eine benutzergetragene Vorrichtung (100) auf einer Interaktionsoberfläche (210) bedienbar ist, genauer gesagt, wobei eine vertikale Interaktionsreferenzachse (Zs) des Interaktionsreferenzkoordinatensystems (Xs, Ys, Zs) orthogonal zu der Interaktionsoberfläche (210) ist.

3. Computerimplementiertes Verfahren (600) nach Anspruch 1 oder 2, umfassend: Definieren eines Messreferenzkoordinatensystems (Xm, Ym, Zm) relativ zu der Vielzahl von Magnetometern (300), genauer gesagt, wobei das Messreferenzkoordinatensystem (Xm, Ym, Zm) einem Standort von mindestens einem Magnetometer der Vielzahl von Magnetometern (300) zugeordnet ist.

4. Computerimplementiertes Verfahren (600) nach einem der vorstehenden Ansprüche, wobei die bestimmte Orientierung eine Drehung und/oder eine Neigung der Vielzahl von Magnetometern (300) relativ zu dem Interaktionsreferenzkoordinatensystem (Xs, Ys, Zs) umfasst.

5. Computerimplementiertes Verfahren (600) nach einem der vorstehenden Ansprüche, wobei die Elektronikvorrichtung (500) ein erstes Vorrichtungsteil (531) und mindestens ein zweites Vorrichtungsteil (532), das mit dem ersten Vorrichtungsteil (531) gekoppelt ist, umfasst, genauer gesagt, wobei die Vielzahl von Magnetometern (300) in dem mindestens einen zweiten Vorrichtungsteil (532) bereitgestellt ist, insbesondere, wobei das Bestimmen einer Orientierung und einer Position (630) das Bestimmen einer Orientierung und einer Position des zweiten Vorrichtungsteils (532) relativ zu dem ersten Vorrichtungsteil (531) umfasst.

6. Computerimplementiertes Verfahren (600) nach Anspruch 5, wobei das Bestimmen einer Orientierung und einer Position (630) umfasst:
Erfassen einer Drehung (631) der Vielzahl von Magnetometern (300), genauer gesagt eines Messreferenzkoordinatensystems (Xm, Ym, Zm), relativ zu dem Interaktionsreferenzkoordinatensystem (Xs, Ys, Zs), insbesondere relativ zu dem ersten Vorrichtungsteil (532), basierend auf den erhaltenen Orientierungsdaten, und/oder
Bestimmen (632) eines Orientierungswinkels (β) zwischen der Vielzahl von Magnetometern (300), genauer gesagt zwischen einem Messreferenzkoordinatensystem (Xm, Ym, Zm), und dem Interaktionsreferenzkoordinatensystem (Xs, Ys, Zs), insbesondere dem ersten Vorrichtungsteil (531), basierend auf den erhaltenen Orientierungsdaten.

7. Computerimplementiertes Verfahren (600) nach Anspruch 5 oder 6, wobei das Bestimmen einer Orientierung und einer Position (630) umfasst:
Bestimmen eines Interaktionsoberflächenstandorts (650), wobei der Interaktionsoberflächenstandort eine Interaktionsoberflächenposition, eine Interaktionsoberflächenorientierung und/oder einen Interaktionsoberflächenabstand (c) relativ zu der Elektronikvorrichtung (500), genauer gesagt zu dem ersten Vorrichtungsteil (531), angibt.

8. Computerimplementiertes Verfahren (600) nach einem der Ansprüche 5 bis 7, wobei das mindestens eine zweite Vorrichtungsteil (532) mit dem ersten Vorrichtungsteil (531) drehbar gekoppelt ist, genauer gesagt, wobei das mindestens eine zweite Vorrichtungsteil (532) über mindestens ein Scharnier (533), das mindestens eine Drehachse (R) definiert, mit dem ersten Vorrichtungsteil (531) drehbar gekoppelt ist, insbesondere, wobei das mindestens eine zweite Vorrichtungsteil (532) mindestens eine Ausgabevorrichtung (510) umfasst.

9. Computerimplementiertes Verfahren (600) nach einem der Ansprüche 5 bis 7, wobei das mindestens eine zweite Vorrichtungsteil (532) ein Ausgabevorrichtungsteil (536) und mindestens ein Hilfsvorrichtungsteil (537) umfasst, genauer gesagt, wobei das Ausgabevorrichtungsteil (536) über mindestens ein Scharnier (533), das mindestens eine Drehachse (R) definiert, mit dem ersten Vorrichtungsteil (531) drehbar gekoppelt ist und wobei das mindestens eine Hilfsvorrichtungsteil (537) mindestens über einen Daten- und/oder Energieübertragungsanschluss (535) mit dem ersten Vorrichtungsteil (531) lösbar gekoppelt ist.

10. Computerimplementiertes Verfahren (600) nach einem der Ansprüche 5 bis 7, wobei das mindestens eine zweite Vorrichtungsteil (532) mindestens über einen Daten- und/oder Energieübertragungsanschluss (535) mit dem ersten Vorrichtungsteil (531) lösbar gekoppelt ist, genauer gesagt, wobei das erste Vorrichtungsteil (531) mindestens eine Ausgabevorrichtung (510) umfasst.

11. Computerimplementiertes Verfahren (600) nach einem der vorstehenden Ansprüche, wobei das Bestimmen eines Standorts (640) der benutzergetragenen Vorrichtung umfasst: Bestimmen eines absoluten Magnetobjektstandorts (641), der eine absolute Magnetobjektposition und/oder eine absolute Magnetobjektorientierung des mindestens einen Magnetobjekts (110) relativ zu einem Messreferenzkoordinatensystem (Xm, Ym, Zm) angibt, genauer gesagt, wobei der absolute Magnetobjektstandort basierend auf den erhaltenen Magnetfeldmessungen bestimmt wird.

12. Computerimplementiertes Verfahren (600) nach einem der vorstehenden Ansprüche, wobei das Bestimmen eines Standorts (640) der benutzergetragenen Vorrichtung umfasst:
Bestimmen einer relativen Magnetobjektposition (644), die eine relative Magnetobjektposition und/oder eine relative Magnetobjektorientierung des mindestens einen Magnetobjekts (110) relativ zu der mindestens einen benutzergetragenen Vorrichtung (110), genauer gesagt zu einem Vorrichtungskoordinatensystem, angibt.

13. Computerimplementiertes Verfahren (600) nach einem der vorstehenden Ansprüche, wobei die mindestens eine benutzergetragene Vorrichtung (100) elektrisch und/oder elektronisch passiv ist.

14. Elektronikvorrichtung (500) zum Bestimmen eines Standorts von mindestens einer benutzergetragenen Vorrichtung (100), umfassend:
eine Vielzahl von Magnetometern (300) und
mindestens einen Orientierungssensor (520),
wobei die Elektronikvorrichtung (500) konfiguriert ist, um ein computerimplementiertes Verfahren (600) nach einem der vorstehenden Ansprüche auszuführen.

15. System (10) zum Bestimmen eines Standorts von mindestens einer benutzergetragenen Vorrichtung (100), umfassend:
mindestens eine benutzergetragene Vorrichtung (100), die einem Interaktionsreferenzkoordinatensystem (Xs, Ys, Zs) zugeordnet ist, wobei die mindestens eine benutzergetragene Vorrichtung (110) mindestens ein Magnetobjekt (110) umfasst, und
eine Elektronikvorrichtung (500) nach Anspruch 14.

## Revendications

1. Procédé mis en œuvre par ordinateur (600) destiné à déterminer un emplacement d'au moins un dispositif porté par l'utilisateur (100), comprenant :
- l'obtention de mesures de champ magnétique (610) associées à au moins un objet magnétique (110) avec une pluralité de magnétomètres (300), dans lequel l'au moins un objet magnétique (110) est accouplé à au moins un dispositif porté par l'utilisateur (100), et dans lequel l'au moins un dispositif porté par l'utilisateur (100) est associé à un système de coordonnées de référence d'interaction (Xs, Ys, Zs),
- l'obtention de données d'orientation (620) à partir d'au moins un capteur d'orientation (520), dans lequel l'au moins un capteur d'orientation (520) est agencé dans un dispositif électronique (500), et dans lequel la pluralité de magnétomètres (300) est agencée dans le dispositif électronique (500),
- la détermination d'une orientation et d'une position (630) de la pluralité de magnétomètres (300) par rapport au système de coordonnées de référence d'interaction (Xs, Ys, Zs) sur la base des données d'orientation obtenues, et
- la détermination d'un emplacement de dispositif porté par l'utilisateur (640) par rapport au système de coordonnées de référence d'interaction (Xs, Ys, Zs) sur la base des mesures de champ magnétique obtenues et de l'orientation et de la position déterminées.

2. Procédé mis en œuvre par ordinateur (600) selon la revendication 1, dans lequel l'au moins un dispositif porté par l'utilisateur (100) peut être utilisé sur une surface d'interaction (210), plus spécifiquement dans lequel un axe de référence d'interaction vertical (Zs) du système de coordonnées de référence d'interaction (Xs, Ys, Zs) est orthogonal à la surface d'interaction (210).

3. Procédé mis en œuvre par ordinateur (600) selon la revendication 1 ou la revendication 2, comprenant : la définition d'un système de coordonnées de référence de mesure (Xm, Ym, Zm) par rapport à la pluralité de magnétomètres (300), plus spécifiquement dans lequel le système de coordonnées de référence de mesure (Xm, Ym, Zm) est associé à un emplacement d'au moins un magnétomètre de la pluralité de magnétomètres (300).

4. Procédé mis en œuvre par ordinateur (600) selon l'une quelconque des revendications précédentes, dans lequel l'orientation déterminée comprend une rotation et/ou une inclinaison de la pluralité de magnétomètres (300) par rapport au système de coordonnées de référence d'interaction (Xs, Ys, Zs).

5. Procédé mis en œuvre par ordinateur (600) selon l'une quelconque des revendications précédentes, dans lequel le dispositif électronique (500) comprend une première partie de dispositif (531) et au moins une seconde partie de dispositif (532) accouplée à la première partie de dispositif (531), plus spécifiquement dans lequel la pluralité de magnétomètres (300) est fournie dans l'au moins une seconde partie de dispositif (532), en particulier dans lequel la détermination d'une orientation et d'une position (630) comprend la détermination d'une orientation et d'une position de la seconde partie de dispositif (532) par rapport à la première partie de dispositif (531).

6. Procédé mis en œuvre par ordinateur (600) selon la revendication 5, dans lequel la détermination d'une orientation et d'une position (630) comprend :
la détection d'une rotation (631) de la pluralité de magnétomètres (300), plus spécifiquement d'un système de coordonnées de référence de mesure (Xm, Ym, Zm), par rapport au système de coordonnées de référence d'interaction (Xs, Ys, Zs), en particulier par rapport à la première partie de dispositif (532), sur la base des données d'orientation obtenues, et/ou
la détermination (632) d'un angle d'orientation (β) entre la pluralité de magnétomètres (300), plus spécifiquement entre un système de coordonnées de référence de mesure (Xm, Ym, Zm), et le système de coordonnées de référence d'interaction (Xs, Ys, Zs), en particulier la première partie de dispositif (531), sur la base des données d'orientation obtenues.

7. Procédé mis en œuvre par ordinateur (600) selon la revendication 5 ou la revendication 6, dans lequel la détermination d'une orientation et d'une position (630) comprend :
la détermination d'un emplacement de surface d'interaction (650), dans lequel l'emplacement de surface d'interaction indique une position de surface d'interaction, une orientation de surface d'interaction et/ou une distance de surface d'interaction (c) par rapport au dispositif électronique (500), plus spécifiquement à la première partie de dispositif (531).

8. Procédé mis en œuvre par ordinateur (600) selon l'une quelconque des revendications 5 à 7, dans lequel l'au moins une seconde partie de dispositif (532) est accouplée de manière rotative à la première partie de dispositif (531), plus spécifiquement dans lequel l'au moins une seconde partie de dispositif (532) est accouplée de manière rotative par le biais d'au moins une charnière (533) définissant au moins un axe de rotation (R) à la première partie de dispositif (531), en particulier dans lequel l'au moins une seconde partie de dispositif (532) comprend au moins un dispositif de sortie (510).

9. Procédé mis en œuvre par ordinateur (600) selon l'une quelconque des revendications 5 à 7, dans lequel l'au moins une seconde partie de dispositif (532) comprend une partie de dispositif de sortie (536) et au moins une partie de dispositif auxiliaire (537), plus spécifiquement, dans lequel la partie de dispositif de sortie (536) est accouplée de manière rotative par le biais d'au moins une charnière (533) définissant au moins un axe de rotation (R) à la première partie de dispositif (531), et dans lequel l'au moins une partie de dispositif auxiliaire (537) est accouplée de manière amovible à la première partie de dispositif (531) au moins par le biais d'un port de transmission de données et/ou d'énergie (535).

10. Procédé mis en œuvre par ordinateur (600) selon l'une quelconque des revendications 5 à 7, dans lequel au moins une seconde partie de dispositif (532) est accouplée de manière amovible à la première partie de dispositif (531) au moins par le biais d'un port de transmission de données et/ou d'énergie (535), plus spécifiquement dans lequel la première partie de dispositif (531) comprend au moins un dispositif de sortie (510).

11. Procédé mis en œuvre par ordinateur (600) selon l'une quelconque des revendications précédentes, dans lequel la détermination de l'emplacement de dispositif porté par l'utilisateur (640) comprend : la détermination d'un emplacement d'objet magnétique absolu (641) indiquant un emplacement d'objet magnétique absolu et/ou une orientation d'objet magnétique absolu de l'au moins un objet magnétique (110) par rapport à un système de coordonnées de référence de mesure (Xm, Ym, Zm), plus spécifiquement dans lequel l'emplacement d'objet magnétique absolu est déterminé sur la base des mesures de champ magnétique obtenues.

12. Procédé mis en œuvre par ordinateur (600) selon l'une quelconque des revendications précédentes, dans lequel la détermination d'un emplacement de dispositif porté par l'utilisateur (640) comprend :
la détermination d'un emplacement relatif d'obj et magnétique (644) indiquant un emplacement relatif d'objet magnétique et/ou une orientation relative d'objet magnétique (110) par rapport à l'au moins un dispositif porté par l'utilisateur (110), plus spécifiquement par rapport à un système de coordonnées de dispositif.

13. Procédé mis en œuvre par ordinateur (600) selon l'une quelconque des revendications précédentes, dans lequel au moins un dispositif porté par l'utilisateur (100) est électriquement et/ou électroniquement passif.

14. Dispositif électronique (500) permettant la détermination d'un emplacement d'au moins un dispositif porté par l'utilisateur (100), comprenant :
une pluralité de magnétomètres (300), et
au moins un capteur d'orientation (520),
dans lequel le dispositif électronique (500) est configuré pour exécuter un procédé mis en œuvre par ordinateur (600) selon l'une quelconque des revendications précédentes.

15. Système (10) permettant la détermination d'un emplacement d'au moins un dispositif porté par l'utilisateur (100), comprenant :
au moins un dispositif porté par l'utilisateur (100) associé à un système de coordonnées de référence d'interaction (Xs, Ys, Zs), dans lequel l'au moins un dispositif porté par l'utilisateur (110) comprend au moins un objet magnétique (110), et
un dispositif électronique (500) selon la revendication 14.
